# EUROPÄISCHE PATENTSCHRIFT

(11) **EP 3 732 605 B1**
(45) Veröffentlichungstag und Bekanntmachung des Hinweises auf die Patenterteilung: **25.06.2025**
(21) Anmeldenummer: 18826352.9
(22) Anmeldetag: 20.12.2018
(51) Int. Cl.: G06F 21/60, G06F 21/62

(54) **SICHERES ABLEGEN UND ZUGREIFEN VON DATEIEN MIT EINER WEBANWENDUNG**
SECURE STORAGE OF AND ACCESS TO FILES THROUGH A WEB APPLICATION
DÉPÔT ET ACCÈS SÛRS À DES FICHIERS AU MOYEN D'UNE APPLICATION WEB

(30) Priorität: 31.12.2017 DE 102017223898
(43) Veröffentlichungstag der Anmeldung: 04.11.2020
(73) Patentinhaber: Bundesdruckerei GmbH, 10969 Berlin (DE)
(72) Erfinder: HENNIG, Patrick, 10437 Berlin (DE); SCHNJAKIN, Maxim, 10245 Berlin (DE); BERGER, Philipp, 10627 Berlin (DE); PAESCHKE, Manfred, 16348 Wandlitz (DE)
(74) Vertreter: Richardt Patentanwälte PartG mbB
(86) Internationale Anmeldenummer: PCT/EP2018/086188
(87) Internationale Veröffentlichungsnummer: WO 2019/129642

(56) Entgegenhaltungen:
- WO-A1-2011/157708
- WO-A1-2014/108183
- US-A1- 2005 240 749
- US-A1- 2008 060 085

## Beschreibung

Die Erfindung betrifft ein Verfahren zum Speichern einer Datei, ein Nutzer-Computersystem, ein Webserver-Computersystem und ein System mit einem Dateimanagementserver-Computersystem, einem Webserver und zumindest einem Nutzer-Computersystem.

Aus dem Stand der Technik sind verschiedene Verfahren zur Speicherung von Nutzerdaten mittels eines oder mehrerer externer Speicherdienste bekannt, z.B.

"OneDrive", "Dropbox", "Google Drive" und andere. Dabei unterscheiden sich die Speicherdienste im Hinblick auf die Sicherheit der dort gespeicherten Daten (unterschiedliche Authentifizierungs- und Verschlüsselungsverfahren), im Hinblick auf die Datenverfügbarkeit und/oder im Hinblick auf andere Faktoren. Teilweise bieten die Speicherdienste auch verschiedene Nutzungsverträge mit unterschiedlichem Leistungsumfang an die sich nach einiger Zeit auch ändern können. Aufgrund des Aufwands, die mit einer Registrierung bei jedem einzelnen Speicherdienste verbunden sind, wird oftmals nur ein einziger Dienst genutzt, um Daten extern zu speichern, z.B. für Backup-Zwecke.

Das Nutzen nur eines einzigen Dienstes hat jedoch zur Folge, dass sämtliche Daten des Nutzers bei einem Speicherdienst konzentriert sind und die Gefahr besteht, dass diese im Fall einer Sicherheitslücke allesamt in die Hände unberechtigter Dritter geraten. Ferner hat in diesem Fall der entsprechende Speicherdienstanbieter vollen Zugriff auf alle Daten des Nutzers, welcher somit die Kontrolle darüber verliert wer Zugriff auf seine persönlichen Daten erhält.

Ferner setzt die Verwendung entsprechender Speicherdienste meist eine auf dem vom Nutzer verwendeten Nutzer-Computersystem installierte Client-Anwendung voraus, durch welche der Nutzer Zugriff auf seine Daten erhält. Verwendet der Nutzer ein anderes Computersystem, welches nicht über die entsprechende Client-Anwendung verfügt, so kann es zu Problemen beim Zugriff auf seien Daten kommen.

Schließlich handelt es sich bei den zuvor genannten Speicherdiensten im Allgemeinen um Speicherdienste, deren Funktionalität zusätzlich zu anderen Funktionalitäten, wie etwa von installierten Anwendungen oder Webanwendungen, in die Programabläufe des Nutzer-Computersystems eingebunden bzw. vom Nutzer ausgeführt werden müssen, will der Nutzer die beim Ausführen der entsprechenden Anwendungen oder Webanwendungen verwendeten und/oder erzeugten Daten speichern.

Die WO 2014/108183 A1 beschreibt ein System und Verfahren zum Speichern von Daten, welches umfasst: ein Codieren einer Datei in mehrere Fragmente, ein Abrufen von Speicherkonfigurationsdaten aus einem Datenverwaltungsspeicher, einschließlich Daten, die mehreren entfernten Speichern zugeordnet sind, wobei die Speicherkonfigurationsdaten eine Angabe einer vordefinierten Datenübertragungsgröße umfassen, die jedem der entfernten Speicher entspricht, ein Verwenden der Speicherkonfigurationsdaten zum Identifizieren einer Speicherstrategie, die jedes Fragment einem entfernten Speicher zuordnet, wobei das Verwenden der Speicherkonfigurationsdaten das Verwenden der Angaben der vordefinierten Datenübertragungsgrößen umfasst, ein Packen eines oder mehrerer Fragmente, die gemäß der Speicherstrategie jeweils einem gemeinsamen entfernten Speicher zugeordnet sind, zum Bilden eines Datenbündels, ein Übermitteln des Datenbündels an den jeweilige gemeinsamen entfernten Speicher, der den Fragmenten im Datenbündel zugeordnet ist, und ein Speichern der Fragmente auf dem identifizierten entfernten Speichervolumen.

Die US 2005/240749 A1 beschreibt ein Verfahren zum Speichern eines Datenelements, welches auf einem Computer in einem Netzwerk ausgeführt wird und ein Identifizieren verfügbarer Speichermittel im Netzwerk umfasst, ein Sammeln von Informationen über die Verfügbarkeit von Datenspeicherkapazität in den identifizierten verfügbaren Speichermitteln und ein Fragmentieren des Datenelements gemäß einer Fragmentierungsrichtlinie und Verteilen resultierender Datenfragmente gemäß einer Verteilungsrichtlinie unter den identifizierten verfügbaren Speichermitteln. Es wird ferner eine Computervorrichtung beschrieben, die in einem Netzwerk betreibbar ist zum Verwalten und Durchführen einer Speicherung eines Datenelements an einem entfernten Speicherort in dem Netzwerk. Die Computervorrichtung umfasst Speicherplatzidentifikationsmittel zum Identifizieren von auf dem Netzwerk zugänglichen Speichermitteln des Netzwerks, Speicherplatzverfügbarkeitsinformationssammelmittel zum Sammeln von Informationen über eine Verfügbarkeit von Datenspeicherkapazität in den verfügbaren Speichermitteln, Fragmentierungsmittel zum Fragmentieren des Datenelements gemäß einer Fragmentierungsrichtlinie und Verteilungsmittel zum Verteilen resultierender Datenfragmente gemäß einer Verteilungsrichtlinie unter den identifizierten verfügbaren Speichermitteln.

Die US 2008/060085 A1 beschreibt ein Verfahren, bei welchem eine elektronische Datei in mehrere Fragmente zerlegt wird. Die Fragmente werden zufällig zu einer Anzahl von Fragmentdateien zusammengesetzt, die zufällig an verschiedenen Orten auf einem oder mehreren Speichergeräten und/oder in einem Netzwerk gespeichert werden. Eines oder mehrere der Fragmente und/oder der Fragmentdateien werden verschlüsselt. Anweisungen zum Wiederherstellen der elektronischen Datei aus den Fragmenten werden erzeugt. Die Anweisungen und sonstigen Informationen, wie Entschlüsselungsschlüssel, zum Wiederherstellen der elektronischen Datei befinden sich in einer geschützten Anwendung, welche absichtlich funktionsunfähig gemacht wird, bis die geschützte Anwendung dynamisch mit einem Sicherheitsmodul verknüpft ist, das beispielsweise von einem Sicherheitsdienst bezogen wird.

Der Erfindung liegt demgegenüber die Aufgabe zugrunde, ein verbessertes Verfahren zur Speicherung von Daten zu schaffen, sowie ein Nutzer-Computersystem, ein Webserver-Computersystem und ein Dateimanagementserver-Computersystem zu diesem Zwecke.

Die der Erfindung zugrunde liegende Aufgabe wird jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

Ausführungsformen umfassen ein Verfahren zum kryptographisch gesicherten Speichern einer Datei unter Verwendung einer Webanwendung. Die Webanwendung wird von einem Webbrowser auf einem Nutzer-Computersystem eines Nutzers ausgeführt.

Das Verfahren umfasst:
- Aufrufen der Webanwendung von einem Webserver-Computersystem über ein Netzwerk durch den Webbrowser auf dem Nutzer-Computersystem,
- Verschlüsseln der Datei mit einem kryptographischen Schlüssel auf dem Nutzer-Computersystem durch die Webanwendung,
- Bereitstellen eines Verteilungsplans durch die Webanwendung, wobei der Verteilungsplan Instruktionen zum Fragmentieren der Datei in eine Mehrzahl von Dateifragmenten mittels eines Fehlerkorrekturverfahrens und Identifikatoren einer Mehrzahl voneinander unabhängiger Speicherdienste umfasst, in deren nichtflüchtigen Speichermedien die erzeugten Dateifragmente gespeichert werden sollen,
- Fragmentieren der verschlüsselten Datei auf dem Nutzer-Computersystem durch die Webanwendung in eine Mehrzahl von Dateifragmente mittels des Fehlerkorrekturverfahren gemäß dem Verteilungsplan, wobei zumindest eines der Dateifragmente Fehlerkorrekturbits beinhaltet,
- Senden der resultierenden Dateifragmente durch die Webanwendung über das Netzwerk an die von dem Verteilungsplan identifizierten Speicherdienste, wobei von dem Webserver-Computersystem für jeden der Speicherdienste jeweils ein Berechtigungstoken als Berechtigungsnachweis zum Speichern des entsprechenden Dateifragments bereitgestellt wird.

Sicher abzulegende Dateien werden lokal im Webbrowser auf dem Client-Computersystem des Nutzers verschlüsselt, in einzelne Fragmente zerteilt und auf unabhängige Speicheranbieter hochgeladen.

Ausführungsformen können den Vorteil haben, dass sie ein Speichern von Daten unter Verwendung einer Webanwendung ermöglichen, d.h. ohne die Notwendigkeit zuvor eine Anwendung bzw. ein Programm zu installieren. Dies ermöglich ein flexibles zugreifen auf die entsprechenden Daten von einem beliebigen Nutzer-Computersystem. Einzige Voraussetzung ist ein Webbrowser, welcher zur Ausführung der entsprechenden Webanwendung konfiguriert ist. Ausführungsformen ermöglichen es insbesondere ein Nutzer-Computersystem in Form eines mobiles, tragbares Telekommunikationssystems zu verwenden. Somit kann ortunabhängig jederzeit auch von Unterwegs auf die gespeicherten Daten zugegriffen werden.

Vertrauliche Dateien des Nutzers werden nicht in ihrer Gesamtheit bei einer einzigen dritten Partei, wie etwa einem einzigen Cloudspeicher-Anbieter, hinterlegt. Zudem erfolgt die Speicherung bzw. Aufbewahrung der einzelnen Dateifragmente jeweils in verschlüsselter Form.

Dieses Verfahren kann vorteilhaft sein, da die Speicherung von mittels eines Fehlerkorrekturverfahrens erzeugten Dateifragmenten in verschiedenen Speicherdiensten die Verfügbarkeit der zu speichernden Daten erhöhen kann. Außerdem kann dadurch auch die Sicherheit der Daten vor einem unberechtigten Zugriff durch den Speicherdienst erhöht werden: Fehlerkorrekturverfahren generieren Dateifragmente, die Korrekturbits enthalten und somit, je nach Anteil der Korrekturbits in den Fragmenten und je nach der Anzahl der generierten Dateifragmente, eine Rekonstruktion der ursprünglichen Datei erlauben, sollte einer oder mehrere der Speicherdienste temporär oder permanent ausfallen. Jedoch kann keiner der Speicherdienste die Daten rekonstruieren, da kein Speicherdienst sämtliche Dateifragmente erhält. Aber selbst wenn ein unberechtigter Dritter Zugriff auf eine Mehrzahl der Dateifragmente erhalten sollte, ist er aufgrund der Verschlüsselung der fragmentierten Datei daran gehindert aus dem Inhalt der Dateifragmente Rückschlüsse auf den Inhalt der Datei ziehen zu können. Nach Ausführungsformen werden die Klartextblöcke der Datei im Zuge der symmetrischen Verschlüsselung abhängig voneinander verschlüsselt. Somit kann verhindert werden, dass ein unberechtigter Dritter in die Lage versetzt wird aus einzelnen Fragmenten der Datei einen Teil der Ausgangsdatei zu entschlüsseln, selbst wenn er in Besitz des symmetrischen Schlüssels zum Entschlüsseln der Datei gelangen sollte.

Beispielsweise wird zur symmetrischen Verschlüsselung ein Blockchiffrenverfahren, wie etwa AES oder DES, verwendet, welches auf iterierten Blockchiffren basiert, wobei die Verarbeitung der Eingabe beispielsweise in mehreren Runden erfolgt. Eine solche Runde kann beispielsweise drei Phasen umfassen: 1. eine Verknüpfung mit einem Rundenschlüssel, 2. eine Substitution, welche beispielsweise aus S-Boxen aufgebaut ist, zur Erzeugung von Konfusion und 3. eine Permutation der Textbits der zu verschlüsselnden Datei zur Implementierung einer Diffusion der Information umfassen, sodass die Ausgabe einer S-Box sich in der nächsten Runde auf mehrere S-Boxen und nach weiteren Runden über den ganzen Textblock verteilt. Durch die Konfusion kann der Zusammenhang zwischen der verschlüsselten Datei, d.h. dem Geheimtext, und der unverschlüsselten Datei, d.h. dem Klartext, komplexer ausgestaltet werden. Durch die Diffusion kann die Information an einer Stelle des Klartextblocks über den gesamten Geheimtextblock verteilt werden, sodass am Ende jedes Bit des Geheimtextblocks von jedem Bit des Klartextblocks abhängen. Beispielsweise beruht der verwendete Algorithmus zur blockorientierten Verschlüsselung auf Cipher Block Chaining (CBC), Cipher Feedback (CFB) oder Output Feedback (OFB). Beispielsweise werden DES, Camellia, RC2, 3DES, FEAL, RC6, AES, Blowfish, Serpent, IDEA, Twofish, Skipjack, CAST, MARS, TEA oder XTEA zur symmetrischen Verschlüsselung verwendet.

Die Sicherheit durch unberechtigten Zugriff durch den Betreiber des Speicherdienst kann in synergistischer Weise dadurch erhöht werden, dass eine strikte Trennung des Zugriffsmanagements durch das Dateimanagementserver-Computersystem in Form der Anforderung der Berechtigungstoken und deren Weiterleitung einerseits und dem Datenmanagement durch die einzelnen Speicherdienste andererseits erfolgt: die Dateifragmente werden unter Umgehung des Dateimanagementserver-Computersystems von dem Nutzersystem direkt in den Speicherdiensten gespeichert. Das Dateimanagementserver-Computersystem agiert also nicht als Router, sondern vermittelt lediglich die Berechtigungstoken, welche dem Nutzer-Computersystem die Speicherung der Dateifragmente über die Speicherdienste erlaubt. Das Dateimanagementserver-Computersystem hat also keinen Zugriff auf den Inhalt der übertragenen Dateifragmente. Die Speicherdienste wiederum verfügen nicht über die Referenzdaten, die zur Rekonstruktion der Datei benötigt werden. Diese Referenzdaten sind lediglich dem Nutzer-Computersystem und/oder dem Dateimanagementserver-Computersystem zugänglich. Zudem kann das Verfahren deutlich schneller extern speichern als herkömmliche Verfahren: um zumindest eine Sicherheitskopie einer Datei extern verfügbar zu haben, musste bisher eine Kopie dieser Datei an einen externen Speicherdienst übertragen werden. Im Falle eines Ausfalls dieses externen Dienstes war die Sicherheitskopie verloren oder zumindest temporär nicht mehr verfügbar. Erfindungsgemäß werden aber Dateifragmente mittels mehrerer Speicherdienste gespeichert. Dies ermöglicht die parallele Übertragung der Dateifragmente über das Netzwerk. Bei paralleler Übertragung der Dateifragmente kann der gesamte Informationsgehalt der Datei einschließlich der Fehlerkorrekturbits innerhalb eines Bruchteils der Zeit erfolgen, die zur Übertragung einer ganzen Dateikopie an einen einzelnen Speicherdienst notwendig wäre. Zudem ist die Datei dank der Fehlerkorrekturbits nicht verloren, sollte einer der Speicherdienste ausfallen, sondern kann sofort und automatisch aus den übrigen Dateifragmenten mit den Fehlerkorrekturbits und den Referenzdaten rekonstruiert werden. Dies kann insbesondere für Dateien relevant sein, die hochverfügbar sein müssen, da z.B. diese für die Arbeitsfähigkeit eines Unternehmens erforderlich sind. Der Umstand, dass der Verteilungsplan für die Datei generiert wird, kann eine feingranulare und für die jeweilige Datei optimierte Generierung des Verteilungsplans ermöglichen.

Ferner wird es dem Nutzer ermöglicht in einer bestehenden Webanwendung Daten verteilt und kryptographisch gesichert, d.h. verschlüsselt und fragmentiert, abzulegen. Der Nutzer kann beim Ausführen der Webanwendung Dateien auf Speicherdienste hochladen, ohne hierzu zusätzliche Anwendungen aufrufen zu müssen. Dadurch wird beispielsweise die Komplexität der Bedienung für den Nutzer reduziert und es werden Fehler vermieden, welche potentieller Weise die Sicherheit der persönlichen Daten des Nutzers gefährden können.

Dem Nutzer wird es ermöglicht Dateien hochladen und zu einem späteren Zeitpunkt und ggf. an einem anderen Ort auf die entsprechenden Dateien zu zugreifen bzw. diese wieder herunterzuladen. Dabei werden die Dateien weder bei dem Betreiber der Webanwendung gespeichert, noch sind die gespeicherten Dateien durch den entsprechenden Betreiber oder andere Dritte einsehbar. Selbst die Speicherdienste, von welchen keiner eine vollständige Datei umfasst, sind von einem Zugriff auf die Daten ausgeschlossen. Die alleinige Verfügungshoheit über seine Daten und insbesondere darüber, wer diese einsehen darf verbleibt somit beim Nutzer.

Dies kann ferner auch für den Anbieter einer Webanwendung von Vorteil sein. Da die Dateien nicht auf dem Webserver-Computersystem des Anbieters der Webanwendung gespeichert werden und auch auf keinem weiteren dem entsprechenden Anbieter zugeordneten Speichersystem, muss der Anbieter der Webanwendung weder entsprechende Ressourcen zum Realisieren eines eigenen Speichers bereitstellen, noch ist es erforderlich, dass er Verantwortung hinsichtlich des Datenschutzes bei der Speicherung der entsprechenden Dateien des Nutzers übernimmt.

Zum Fragmentieren und verteilten Speichern der Datei wird ein Verteilungsplan verwendet, welcher Informationen darüber bereitstellt, wo die einzelnen Dateifragmente zu einer bestimmten Datei zu finden sind und wie diese Dateifragmente wieder zusammenzusetzen sind. Der Verteilungsplan ist dabei eindeutig identifizierbar und der entsprechenden Datei zugeordnet. Nach Ausführungsformen wird der Verteilungsplan in verschlüsselter Form gespeichert und bereitgestellt. Beispielsweise ist der Verteilungsplan mit einem persönlichen Passwort geschützt oder mit einem öffentlichen kryptographischen Schlüssel eines asymmetrischen Schlüsselpaars verschlüsselt. Nach Ausführungsformen kann der Verteilungsplan auch durch ein symmetrisches Passwort verschlüsselt sein. nach Ausführungsformen kann der Verteilungsplan mit demselben kryptographischen Schlüssel wie die Datei oder mit einem von diesem verschiedenen kryptographischen Schlüssel verschlüsselt sein.

Der Verteilungsplan, welcher beispielsweise über einen Link identifiziert ist, d.h. eine Speicheradresse unter welcher der Verteilungsplan abrufbar ist, wie etwa eine URL, wird in der Webanwendung an die zu speichernde Datei gebunden. Dies kann beispielsweise durch ein Erzeugen von Referenzdaten erfolgen, welche einen Identifikator der Datei sowie den entsprechenden Link des Verteilungsplans umfassen. Somit kann ein Nutzer in die Lage versetzt werden zu einem späteren Zeitpunkt und ggf. auch an einem anderen Ort, auf den Verteilungsplan seiner Datei zugreifen und die entsprechende Datei lokal in seinem Webbrowser wieder zusammenzusetzen, sodass er die Ursprungsdatei erhält. Der Verteilungsplan stellt beispielsweise sicher, dass nur Speicherdienste verwendet werden, welche vordefinierte Mindestsicherheitsstandards erfüllen.

Ein Uniform Resource Locator (URL), d.h. ein einheitlicher Ressourcenzeiger, ist ein Identifikator zum Identifizieren und Lokalisieren von Ressourcen in einem Netzwerk. Die URL umfasst dabei Angaben über eine zu verwendendes Zugriffsverfahren bzw. ein Zugriffsprotokoll, wie etwa HTTP oder FTP, und/oder einen Ort in dem Netzwerk, an welchem die Ressource angeordnet ist.

Eine Webanwendung bezeichnet hier ein Anwendungsprogramm, welches maschinenlesbare Programminstruktionen umfasst, die über ein Netzwerk, wie etwa das Internet, von einem Computersystem, d.h. einem Webserver-Computersystem, zum Aufrufen bereitgestellt werden. Die bereitgestellten Programminstruktionen sind dazu konfiguriert von einem Webbrowser über das Netzwerk aufgerufen und in dem entsprechenden Webbrowser ausgeführt zu werden. Zusätzlich kann über die in dem Webbrowser ausgeführte Webanwendung Zugriff auf einen oder mehrere Dienste gewährt werden, welche das Webserver-Computersystem nach einem nach dem Client-Server-Modell über das Netzwerk bereit bereitstellt. Ein solches Client-Server-Modell definiert ein Modell zur Verteilung von Diensten in einem Netzwerk. Die im Zuge der Dienstausführung anfallenden Aufgaben werden von Programmen bzw. von Programme ausführenden Computersystemen erledigt. Hierbei fordert ein Client-Computersystem einen entsprechenden Dienst von einem Server-Computersystem an. Bei dem Server-Computersystem und dem Client-Computersystem kann es sich insbesondere um zwei voneinander verschiedene, räumlich getrennt und unabhängig voneinander angeordnete Computersysteme handeln. Bei dem Server-Computersystem kann es sich insbesondere um ein ortsfest angeordnetes Computersystem handeln. Bei einem Client-Computersystem kann es sich insbesondere um ein mobiles, tragbares Telekommunikationsgerät handeln. Hierbei kann das Server-Computersystem insbesondere dazu konfiguriert sein, simultan eine Mehrzahl von Anfragen einer Mehrzahl von Client-Computersystemen abarbeiten und beantworten.

Ein Server-Computersystem bezeichnet ein Computersystem mit zumindest einem Prozessor, einem Speicher und einer Kommunikationsschnittstelle zur Kommunikation über ein Netzwerk, wobei in dem Speicher ein Serverprogramm mit maschinenlesbaren Programminstruktionen gespeichert ist. Ein Client-Computersystem bezeichnet ein Computersystem mit zumindest einem Prozessor, einem Speicher und einer Kommunikationsschnittstelle zur Kommunikation über ein Netzwerk, wobei in dem Speicher ein Clientprogramm mit maschinenlesbaren Programminstruktionen gespeichert ist. Bei Ausführen der Programminstruktionen des Clientprogramms durch den Prozessor des Client-Computersystems steuert dieser das Client-Computersystem, sodass eine Dienstanforderung zur Anforderung eines von einem Server-Computersystem bereitgestellten Dienst unter Verwendung der Kommunikationsschnittstelle des Client-Computersystems über das Netzwerk an das entsprechende Server-Computersystem gesendet wird. Bei Ausführen der Programminstruktionen des Serverprogramms durch den Prozessor des Server-Computersystem steuert dieser das Server-Computersystem, sodass eine Dienstanforderung eines Client-Computersystems unter Verwendung der Kommunikationsschnittstelle des Server-Computersystems über das Netzwerk empfangen und verarbeitet wird. In Antwort auf die Anforderung wird eine Antwort erstellt und unter Verwendung der Kommunikationsschnittstelle des Server-Computersystems über das Netzwerk an das anfordernde Client-Computersystem gesendet. Hierdurch wird eine Kommunikation zwischen dem Server-Computersystem und dem Client-Computersystem, bzw. zwischen dem Serverprogramm und dem Clientprogramm, implementiert, sodass dem Client-Computersystem Zugang zu einem von dem Server-Computersystem bereitgestellten Dienst ermöglicht wird.

Der Prozessor des Server-Computersystem führt die Programminstruktionen des Serverprogramms aus, während der Prozessor des Client-Computersystem die Programminstruktionen des Clientprogramms ausführt. Die Kommunikation zwischen Client-Computersystem und Server-Computersystem ist abhängig von dem angeforderten Dienst, der bestimmt welche Daten zwischen den beiden Computersystemen ausgetauscht werden. Das Server-Computersystem ist dabei in Bereitschaft, um jederzeit auf die Kontaktaufnahme, d.h. eine Dienstanforderung, eines Client-Computersystem reagieren zu können. Im Unterschied zum Client-Computersystemen, welche einen Dienst anfordert, verhält sich das Server-Computersystem somit passiv und wartet auf entsprechende Dienstanforderungen. Die Regeln der Kommunikation für einen Dienst, d.h. das Format, das Aufrufen des Server-Computersystems, die Bedeutung der zwischen Server-Computersystem und Client-Computersystem ausgetauschten Daten etc., werden durch ein für den jeweiligen Dienst spezifisches Kommunikationsprotokoll festgelegt.

Ein Dienst bezeichnet eine Gruppe von ein oder mehreren festgelegten Aufgaben, deren Ausführung das Server-Computersystem anbietet und welche ein oder mehrere Client-Computersysteme nutzen können.

Nach Ausführungsformen ermöglicht die Webanwendung neben einem Zugriff auf Dienste des Webserver-Computersystems gemäß einem Client-Server-Modell eine lokale Ausführung von Programminstruktionen und damit Funktionalitäten im Webbrowser auf einem Nutzer-Computersystem. Dies kann insbesondere vorteilhaft für ein kryptographisch sicheres Speichern von Dateien sein. Werden kryptographische Programminstruktionen, wie etwa ein Verschlüsseln oder Entschlüsseln von Dateien, lokal auf dem Nutzer-Computersystem ausgeführt, so kann dies die Sicherheit des Verfahrens erhöhen. Dies gilt insbesondere, wenn die zum Verschlüsseln bzw. Entschlüsseln verwendeten kryptographischen Schlüssel das Nutzer-Computersystem nicht verlassen und beispielsweise in einem geschützten Speicherbereich eines Speichers des Nutzer-Computersystems gespeichert werden.

Ferner können entsprechende kryptographische Schlüssel nach Ausführungsformen auf einem zusätzlichen Hardwaretoken gespeichert sein, etwa in einem geschützten Speicherbereich eines Speichers des Hardwaretokens, wobei ein Entschlüsseln (ggf. auch ein Verschlüsseln) ausschließlich auf dem entsprechenden Hardwaretoken erfolgt.

Webanwendungen sind nicht lokal auf dem Nutzer-Computersystem des Nutzers installiert, werden aber auf diesem ausgeführt. Zusätzlich können sie Zugriff auf Dienste bieten, welche nicht auf dem Nutzer-Computersystem, sondern auch dem Webserver-Computersystem ausgeführt werden. Dienste werden somit von dem Webserver-Computersystem als einem Terminalserver zentral bereitgestellt und ausgeführt. Das Nutzer-Computersystem startet die Ausführung der von dem Dienst umfassten Programminstruktionen nicht von einem lokalen Speicher, wie etwa einer lokalen Festplatte, sondern von dem Webserver-Computersystem aus. Die Ergebnisse der entsprechenden Datenverarbeitung im Zuge der Dienstausführung werden von dem Webserver-Computersystem zur Anzeige und/oder Ausgabe an das lokale Client-Computersystem des Nutzers gesendet. Eine von einem Webserver-Computersystem bereitgestellte Webanwendung wird beispielsweise unter Verwendung eines auf dem Client-Computersystem des Nutzers ausgeführten Webbrowser genutzt. Dabei erfolgt die Kommunikation mit dem Webserver-Computersystem sowie die Darstellung der Benutzeroberfläche durch den Webbrowser. Zur Kommunikation werden Kommunikationsprotokolle zur Kommunikation über Netzwerke verwendet, wie etwa das HTTP-Protokoll oder HTTPS-Protokoll.

Ein Vorteil von Webanwendungen ergibt sich beispielsweise beim Einspielen von Updates. Entsprechende Updates müssen nur einmalig auf dem Webserver-Computersystem eingespielt werden und können dann von dem Nutzer-Computersystem genutzt werden.

Nach Ausführungsformen emuliert der Webbrowser beim Ausführen der Webanwendung eine Client-Anwendung mit der entsprechenden Funktionalität.

Die Webanwendung stellt die Programminstruktionen dabei in Form einer Software as a Service bereit. Software as a Service (SaaS) ist ein Teilbereich des Cloud-Computings, wobei Software und IT-Infrastruktur bei einem externen IT-Dienstleister betrieben und vom Nutzer als Dienstleistung genutzt werden können. Für die Nutzung wird ein internetfähiger Computer sowie die Internetanbindung an den externen IT-Dienstleister benötigt. Der Zugriff auf die Software wird den Webbrowser realisiert.

Nach Ausführungsformen stellt das Webserver-Computersystem über die Webanwendung einen Dienst bereit, wobei die zu speichernde Datei Daten umfasst, welche im Zuge eines Ausführens des Dienstes erzeugt und/oder verwendet werden. Ausführungsformen können den Vorteil haben, dass das sichere Speichern von Dateien in eine bestehende Webanwendung eingebunden werden kann, über welche das Webserver-Computersystem Dienste, insbesondere SaaS, bereitstellt. Somit wird nicht nur eine Datenverarbeitung durch die entsprechenden Dienste ermöglicht, sondern darüber hinaus wird auch eine sichere Speicherung der verwendeten bzw. erzeugten Daten ergänzt.

Gegeben sei beispielsweise eine beliebige Webanwendung, welche dem Nutzer bestimmte Dienste zur Verfügung stellt. Möchte der Anbieter der Webanwendung dem Nutzer zusätzlich eine Möglichkeit bieten, Dateien zur sicheren Speicherung hochzuladen, herunterzuladen und verwalten zu können, ermöglichen es Ausführungsformen externe Speicheranbieter zu nutzen, ohne dass sich Sicherheitsprobleme ergeben oder dass der Anbieter der Webanwendung eigene Speicherressourcen zur Verfügung stellen müsste.

Zum sicheren Speichern von Dateien ist lediglich die Einbindung entsprechender Module zum Hoch- und Herunterladen von Dateien in die Webanwendung notwendig und das Ansprechen der Kommunikationsschnittstelle bzgl. der Autorisierung des Uploads bzw. Downloads durch das Webserver-Computersystem. Das Verwalten von Referenzdaten, welche beispielsweise die den einzelnen Dateien zugeordneten Verteilungspläne identifizieren, findet beispielsweise in einem zusätzlichen Servermodul des Webserver-Computersystems statt und wird komplettiert durch die Referenzlist pro Nutzer auf Seiten des Webserver-Computersystems. Die Referenzliste umfasst für die Nutzer der Webanwendung jeweils und deren einzelne Dateien jeweils eine Referenz auf einen Verteilungsplan für die entsprechende Datei. Die Module an sich, welche das Hochladen und Herunterladen von Daten ausführen, können nicht umgangen werden. Die Referenzen, welche Geheimnisse zum Zugriff auf die Dateien enthalten, müssen in der Webanwendung bzw. auf dem Webserver-Computersystem so gesichert werden, dass lediglich ein berechtigter Nutzer auf diese zugreifen kann. Nach Ausführungsformen basiert die Sicherheit des Konzepts dabei auf der sicheren Verwaltung der Referenzlisten auf Seiten des Webserver-Computersystem. Beispielsweise sind zumindest Teile der Referenzdaten verschlüsselt und/oder können nur nach einer erfolgreichen Authentifizierung eines anfragenden Nutzers über eine mittels Ende-zu-Ende-verschlüsselten Datenverbindung abgerufen werden.

Nach Ausführungsformen umfasst das Bereitstellen des Verteilungsplans ein Erzeugen des Verteilungsplans auf dem Nutzer-Computersystem durch die Webanwendung. Ausführungsformen können den Vorteil haben, dass die Webanwendung basierend auf den zu speichernden Daten, z.B. ihre Größe, einen geeigneten Verteilungsplan erzeugt.

Nach Ausführungsformen umfasst das Bereitstellen des Verteilungsplans ein Empfangen des Verteilungsplans auf dem Nutzer-Computersystem durch die Webanwendung. Ausführungsformen können den Vorteil haben, dass ein bereits bestehender oder ein von dem Webserver-Computersystem oder einem Dateimanagementserver-Computersystem erzeugter Verteilungsplan durch die Webanwendung genutzt werden kann. Beispielsweise wird der Verteilungsplan auf in Antwort auf eine Anforderung durch das Webserver-Computersystem von dem Dateimanagementserver-Computersystem erzeugt und über das Webserver-Computersystem an die Webanwendung gesendet.

Nach Ausführungsformen kommuniziert die Webanwendung direkt mit dem Dateimanagementserver-Computersystem, wobei sich die Webanwendung gegenüber dem Dateimanagementserver-Computersystem als zu dem Webserver-Computersystem gehörig identifiziert. Das Dateimanagementserver-Computersystem kennt somit beispielsweise nur das Webserver-Computersystem, welches die Verteilungspläne intern unterschiedlichen Nutzern zuordnet.

Nach Ausführungsformen umfasst das Verfahren ferner ein Senden des Verteilungsplans von der Webanwendung über das Netzwerk an ein Dateimanagementserver-Computersystem zur Speicherung. Ausführungsformen können den Vorteil haben, dass die Speicherung und Verwaltung der Verteilungspläne, ebenso wie Verwaltung der Berechtigungstoken von dem Dateimanagementserver-Computersystem bereitgestellt wird, worauf das Webserver-Computersystem zum Einbinden der Ablegefunktion für Dateien zurückgreift.

Nach Ausführungsformen umfasst das Verfahren ferner ein Verschlüsseln des Verteilungsplans. Ausführungsformen können den Vorteil haben, dass die Verteilungspläne nur von Besitzern eines entsprechenden kryptographischen Schlüssels verwendet werden können. Beispielsweise handelt es sich bei diesem kryptographischen Schlüssel um einen symmetrischen kryptographischen Schlüssel im Falle einer symmetrischen Verschlüsselung oder um einen privaten kryptographischen Schlüssel im Falle einer asymmetrischen Verschlüsselung mit einem öffentlichen kryptographischen Schlüssel.

Nach Ausführungsformen werden die Berechtigungstoken durch die Webanwendung auf dem Nutzer-Computersystem von dem Dateimanagementserver-Computersystem empfangen, wobei die empfangenen Berechtigungstoken ein Berechtigungstoken von jedem der in dem Verteilungsplan identifizierten mehreren Speicherdiensten umfassen, welche auf Veranlassung des Webserver-Computersystem durch das Dateimanagementserver-Computersystem angeforderter und an das Nutzer-Computersystem weitergeleitet wurden.

Ausführungsformen können den Vorteil haben, dass es nur einem berechtigten Nutzer, d.h. einem durch das Webserver-Computersystem autorisierten Nutzer, ermöglicht wird Dateien zu speichern.

Nach Ausführungsformen setzt das Empfangen der Berechtigungstoken ein erfolgreiches Authentifizieren des Webserver-Computersystems gegenüber dem Dateimanagementserver-Computersystem voraus. Ausführungsformen können den Vorteil haben, dass das Webserver-Computersystems gegenüber dem Dateimanagementserver-Computersystem als verantwortliche Instanz für das Speichern der Dateien auftritt. Somit muss sich der Nutzer gegenüber dem Dateimanagementserver-Computersystem authentifizieren. Mit anderen Worten kann das sichere Ablegen von Dateien in die Webanwendung eingebunden werden, ohne dass der Nutzer mit zusätzlichen Servern kommunizieren und/oder sich gegenüber diesen authentifizieren muss. Insbesondere ist kein Einrichten zusätzlicher Nutzerkonten notwendig. Nach Ausführungsformen ist ein einmaliges registrieren gegenüber dem Webserver-Computersystem hinreichend. Im Zuge des Speicherns von Dateien muss sich der Nutzer später nur gegenüber dem Webserver-Computersystem authentifizieren, was nach Ausführungsformen beispielsweise im Zuge eines Einloggens beim Aufrufender Webanwendung über den Webbrowser erfolgt.

Nach Ausführungsformen erfolgt das Senden der Dateifragmente durch die Webanwendung an die identifizierten Speicherdienste unter Umgehung des Webserver-Computersystems und/oder des Dateimanagementserver-Computersystems. Ausführungsformen können den Vorteil haben, dass weder das Webserver-Computersystem noch das Dateimanagementserver-Computersystem Zugriff auf alle Dateifragmente erhalten.

Nach Ausführungsformen sind die Berechtigungstoken als URLs ausgebildet, die jeweils einen direkten Lesezugriff auf einen durch die URL identifizierten Speicherplatz auf einem der Speichermedien eines der Speicherdienste ermöglichen. Ausführungsformen können den Vorteil haben, dass ein einfaches Zugreifen auf die Speicherplätze zum Heraufladen und/oder Herunterladen der Dateifragmente bereitgestellt wird, welches zugleich als Berechtigungsnachweis für die Berechtigung des entsprechenden Zugriffs gilt.

Nach Ausführungsformen umfasst das Verfahren ferner ein Erstellen von Referenzdaten, welche der Datei zugeordnet sind, zur Rekonstruktion der Datei aus den verteilt gespeicherten Dateifragmenten dienen und von dem Webserver-Computersystem gespeichert werden. Ausführungsformen können den Vorteil haben, dass mittels der Referenzdaten in effizienter Form die verteilt gespeicherten Dateien verwaltete werden können.

Nach Ausführungsformen umfassen die Referenzdaten: einen Identifikator des Nutzers, einen Identifikator der Datei, einen Identifikator des Verteilungsplans, einen Identifikator eines kryptographischen Schlüssels zum Entschlüsseln der verschlüsselten Datei, einen Identifikator eines kryptographischen Schlüssels zum Entschlüsseln des verschlüsselten Verteilungsplans, einen Hash-Wert der vollständigen Datei und/oder Hash-Werte der gespeicherten Dateifragmente. Ausführungsformen können den Vorteil haben, dass die Referenzdaten den Verteilungsplan der Datei und/oder dem Nutzer zuordnen können. Ferner können die Referenzdaten einer Überprüfung der Integrität der Datei bzw. der Dateifragmente anhand der Hash-Werte dienen. Schließlich können die Referenzdaten alles identifizieren, was zum Rekonstruieren einer Datei erforderlich ist. Nach Ausführungsformen geben die Identifikatoren zugleich die Speicheradressen an unter welchen die identifizierten und benötigten Datenobjekte gefunden werden können. Bei den verwendeten Hash-Werten kann es sich beispielsweise um einen mittels eines MD5, Sha-1 oder Sha-2 Hashalgorithmus berechneten Hashwert handeln. Beispielsweise ist die Datei mit einem symmetrischen Schlüssel, etwa in Form eines Hashwerts der Datei, verschlüsselt.

Nach Ausführungsformen können die dateifragment-spezifischen Hashwerte als Identifikatoren der Dateifragmente dienen. Die Hash Werte der Dateifragmente können mit einem Mapping mit dem ursprünglichen Dateinamen verknüpft werden, und das Mapping kann zusammen mit dem ursprünglichen Dateinamen in die Referenzdaten aufgenommen werden. Das Nutzer-Computersystem verschlüsselt jedes der Dateifragmente der Datei, wobei der Hashwert der gesamten, ursprünglichen Datei als symmetrischer Schlüssel verwendet wird. Vorzugsweise wird eine starke Verschlüsselung beispielsweise mittels AES-256 oder AES 512 verwendet.

Nach Ausführungsformen werden die Referenzdaten von dem Webserver-Computersystem in kryptographisch gesicherter Form gespeichert. Ausführungsformen können den Vorteil haben, dass die Sicherheit des Verfahrens erhöht wird. Beispielsweise werden die Referenzdaten in einem geschützten Speicherbereich des Speichers des Webserver-Computersystem. Ferner wird ein Zugriff beispielsweise nur unter der Voraussetzung einer erfolgreichen Authentifizierung eines anfragenden gewährt und/oder die entsprechenden Daten werden nur über eine mittels Ende-zu-Ende-Verschlüsselung gesicherten Datenverbindung übertragen.

Nach Ausführungsformen kommuniziert die Webanwendung die Referenzdaten an ein Servermodul zum Verwalten von Referenzdaten, welches durch einen Prozessor des Webserver-Computersystem ausgeführt wird. Ausführungsformen können den Vorteil haben, dass durch ein entsprechendes Servermodul die Funktionalität eines gegebenen Webserver-Computersystems um dieses Verwalten von Referenzdaten erweitert werden kann.

Nach Ausführungsformen werden die Referenzdaten von dem Webserver-Computersystem in einer Referenzliste mit einer Mehrzahl von Referenzdaten für eine Mehrzahl von Dateien verschiedener Nutzer der Webanwendung gespeichert. Ausführungsformen können den Vorteil haben, dass das Webserver-Computersystem die Webanwendung und/oder seine Dienste einer Mehrzahl von Nutzern zur Verfügung stellen kann inklusive einer sicheren Speicherung der Dateien aller Nutzer.

Nach Ausführungsformen umfasst das Verfahren ferner ein Authentifizieren des Nutzers gegenüber dem Webserver-Computersystem. Ausführungsformen können den Vorteil haben, dass sichergestellt werden kann, dass nur ein berechtigter Nutzer Zugriff auf die sicher gespeicherten Dateien erhält.

Nach Ausführungsformen sind in die Webanwendung ein oder mehrere Module zum verteilten Speichern der Datei auf den Speicherdiensten eingebunden und das Verschlüsseln, Fragmentieren und Senden erfolgen durch ein Ausführen der Module der Webanwendung in dem Webbrowser durch einen Prozessor des Nutzer-Computersystems.

Ausführungsformen können den Vorteil haben, dass die entsprechenden Module lokal im Webbrowser auf dem Clientcomputersystem ausgeführt werden. Durch ein Einbinden entsprechender Module können beliebige Webanwendungen in die Lage versetzt werden ein kryptographisch gesichertes Speichern von Daten zu ermöglichen. Hierbei basiert die gesamte Funktionalität bezüglich des sicheren Ablegens von Dateien auf den in die Webanwendung eingebundenen Modulen. Die entsprechenden Funktionen der Webanwendung werden beispielsweise über eine Bibliothek zur Verfügung gestellt.

Ausführungsformen ermöglichen ein Einbinden eines sicheren Ablegens von Dateien in eine bestehende Webanwendung in Form entsprechender Module als Microservice.

Ein Microservice bezeichnet einen Teilprozess einer komplexen Anwendung, welche in eine Mehrzahl unabhängiger Prozesse komponiert bzw. kombiniert ist, die untereinander mit sprachunabhängigen Programmierschnittstellen kommunizieren. Die einzelnen Microservices bzw. Dienste sind weitgehend entkoppelt und erledigen jeweils eine kleine Teilaufgabe. Die Verwendung von Microservices ermöglicht somit einen modularen Aufbau der Anwendung.

Beispielsweise umfasst die Webanwendung ein Verschlüsselungsmodul zum Verschlüsseln von Dateien, ein Fragmentierungsmodul zum Fragmentieren von Dateien sowie ein Übertragungsmodul zum Übertragen bzw. Senden der Dateifragmente. Nach Ausführungsformen ist das Verschlüsselungsmodul ferner zum Entschlüsseln von Dateien, das Fragmentierungsmodul zum Defragmentieren von Dateifragmenten und das Übertragungsmodul zum Herunterladen von Dateifragmenten konfiguriert.

Beispielsweise werden das Verschlüsselungsmodul, das Fragmentierungsmodul sowie das Übertragungsmodul in einem Uploadmodul zusammengefasst, welches ein sicheres Ablegen von Dateien in verschlüsselter und fragmentierter Form auf einem verteilten Speichersystem mit voneinander unabhängigen Speichermedien ermöglicht.

Nach Ausführungsformen umfasst das Verfahren zum Herunterladen der kryptographisch gesichert gespeicherten Datei unter Verwendung der Webanwendung, welche von dem Webbrowser auf dem Nutzer-Computersystem ausgeführt wird, ferner:
- Aufrufen der Webanwendung von dem Webserver-Computersystem über das Netzwerk durch den Webbrowser auf dem Nutzer-Computersystem,
- Bereitstellen des Verteilungsplans der verteilt gespeicherten Datei durch die Webanwendung, wobei der Verteilungsplan Instruktionen zum Defragmentieren der Datei aus einer Mehrzahl von Dateifragmenten mittels eines Fehlerkorrekturverfahrens und Identifikatoren der Mehrzahl voneinander unabhängiger Speicherdienste umfasst, in deren nichtflüchtigen Speichermedien die Dateifragmente gespeichert sind,
- Bereitstellen eines Berechtigungstokens von jedem der Speicherdienste zumindest einer Auswahl der Speicherdienste, in deren nichtflüchtigen Speichermedien die Dateifragmente gespeichert sind, durch das Webserver-Computersystem, wobei die von der Auswahl der Speicherdienste umfassten Dateifragmente hinreichend für eine vollständige Rekonstruktion der Datei sind,
- Herunterladen der Dateifragmente von den einzelnen Speicherdiensten unter Verwendung der Berechtigungstoken als Berechtigungsnachweise zum Herunterladen,
- Defragmentieren der verschlüsselten Datei aus den Dateifragmenten auf dem Nutzer-Computersystem durch die Webanwendung mittels des Fehlerkorrekturverfahren gemäß dem Verteilungsplan,
- Entschlüsseln der verschlüsselten Datei mit einem kryptographischen Schlüssel auf dem Nutzer-Computersystem durch die Webanwendung.

Ein Abrufen der verteilt gespeicherten Dateien erfolgt über den auf dem Nutzer-Computersystem des Nutzers ausgeführten Webbrowser. Die Dateifragmente werden von den Speicheranbietern heruntergeladen, defragmentiert und entschlüsselt, sodass sie in der Ursprungsdatei resultieren. Ausführungsformen können den Vorteil haben, dass ein effizientes und sicheres herunterladen der verteilt gespeicherten Dateifragmente ermöglicht wird.

Nach Ausführungsformen stellt das Webserver-Computersystem über die Webanwendung einen Dienst bereit und von der heruntergeladenen Datei umfasste Daten werden im Zuge eines Ausführens des Dienstes durch die Webanwendung verwendet. Ausführungsformen können den Vorteil haben, dass ein Herunterladen einer für den Dienst oder im Zuge der Ausführung des Dienstes notwendigen Datei bzw. von notwendigen Daten in die Webanwendung integriert werden kann.

Nach Ausführungsformen umfasst das Bereitstellen des Verteilungsplans ein Empfangen des Verteilungsplans von dem Dateimanagementserver-Computersystem auf dem Nutzer-Computersystem durch die Webanwendung. Nach Ausführungsformen wird der Verteilungsplan von dem Dateimanagementserver-Computersystem direkt an die Webanwendung gesendet oder von dem Webserver-Computersystem weitergeleitet.

Nach Ausführungsformen wird der Verteilungsplan in verschlüsselter Form bereitgestellt und das Bereitstellen umfasst ferner ein Entschlüsseln des Verteilungsplans auf dem Nutzer-Computersystem durch die Webanwendung. Ausführungsformen können den Vorteil haben, dass der Verteilungsplan effizient geschützt werden kann. Der kryptographische Schlüssel zum Entschlüsseln des Verteilungsplans wird beispielsweise lokal auf dem Nutzer-Computersystem gespeichert oder dem Nutzer-Computersystem von dem Nutzer, etwa unter Verwendung eines Hardwaretokens, im Bedarfsfall lokal zur Verfügung gestellt.

Nach Ausführungsformen umfasst das Bereitstellen der Berechtigungstoken auf dem Nutzer-Computersystem durch die Webanwendung ein Empfangen der Berechtigungstoken von dem Dateimanagementserver-Computersystem, welche auf Veranlassung des Webserver-Computersystem durch das Dateimanagementserver-Computersystem angeforderter und an das Nutzer-Computersystem weitergeleitet wurden. Ausführungsformen können den Vorteil haben, dass nur berechtigte Nutzer auf die verteilt gespeicherten Dateifragmente zugreifen können. Ferner wird der Zugriff von dem Dateimanagementserver-Computersystem verwaltet und muss durch das Webserver-Computersystem freigegeben bzw. veranlasst werden.

Nach Ausführungsformen setzt das Empfangen der Berechtigungstoken ein erfolgreiches Authentifizieren des Webserver-Computersystems gegenüber dem Dateimanagementserver-Computersystem voraus.

Nach Ausführungsformen erfolgt das Herunterladen der Dateifragmente durch die Webanwendung von den identifizierten Speicherdiensten unter Umgehung des Webserver-Computersystems und/oder des Dateimanagementserver-Computersystems. Ausführungsformen können den Vorteil haben, dass weder Webserver-Computersystem, noch Dateimanagementserver-Computersystem im Zuge des Herunterladens Zugriff auf alle für eine Rekonstruktion der Datei notwendigen Datenfragmente erhalten.

Nach Ausführungsformen umfasst das Verfahren ferner ein Empfangen von Referenzdaten, welche der herunterzuladenden Datei zugeordnet sind und zur Rekonstruktion der Datei aus den verteilt gespeicherten Dateifragmenten dienen, von dem Webserver-Computersystem durch die Webanwendung auf dem Nutzer-Computersystem. Ausführungsformen können den Vorteil haben, dass durch die Referenzdaten das Herunterladen der Dateien effizient verwaltet werden kann.

Nach Ausführungsformen setzt das Herunterladen der Datei ein erfolgreiches Authentifizieren des Nutzers gegenüber dem Webserver-Computersystem voraus. Ausführungsformen können den Vorteil haben, dass nur berechtigte Nutzer Zugriff auf die verteilt gespeicherte Datei erhalten.

Nach Ausführungsformen sind in die Webanwendung ein oder mehrere Module zum verteilten Speichern der Datei auf den Speicherdiensten eingebunden und das Herunterladen, Defragmentieren und Entschlüsseln erfolgen durch ein Ausführen der Module der Webanwendung in dem Webbrowser durch den Prozessor des Nutzer-Computersystems. Ausführungsformen können den Vorteil haben, dass eine gegebene Webanwendung durch die Module in einfacher Weise um die Funktionalität eines Herunterladens benötigter Dateien erweitert werden kann. Hierbei basiert die gesamte Funktionalität bezüglich des sicheren Abrufens von Dateien auf den in die Webanwendung eingebundenen Modulen. Die entsprechenden Funktionen der Webanwendung werden beispielsweise über eine Bibliothek zur Verfügung gestellt. Ausführungsformen ermöglichen somit ein Einbinden eines sicheren Abrufens von Dateien in eine bestehende Webanwendung in Form entsprechender Module als Microservice.

Beispielsweise umfasst die Webanwendung ein Übertragungsmodul zum Übertragen bzw. Herunterladen der Dateifragmente, ein Fragmentierungsmodul zum Defragmentieren der Dateifragmente und ein Verschlüsselungsmodul zum Entschlüsseln der verschlüsselten Datei. Nach Ausführungsformen ist das Verschlüsselungsmodul ferner zum Verschlüsseln von Dateien, das Fragmentierungsmodul zum Fragmentieren von Dateien und das Übertragungsmodul zum Hochladen von Dateifragmenten konfiguriert.

Beispielsweise werden das Verschlüsselungsmodul, das Fragmentierungsmodul sowie das Übertragungsmodul in einem Downloadmodul zusammengefasst, welches ein sicheres Abrufen von Dateien in verschlüsselter und fragmentierter Form von einem verteilten Speichersystem mit voneinander unabhängigen Speichermedien ermöglicht.

Nach Ausführungsformen werden die Referenzdaten und/oder der Verteilungsplan in verschlüsselter Form gespeichert und die kryptographischen Schlüssel zum Entschlüsseln Referenzdaten und/oder des Verteilungsplans von einem Hardwaretoken bereitgestellt, wobei das Verfahren ferner umfasst:
- Senden einer Entschlüsselungsanfrage des Nutzer-Computersystems zum Zugriff auf die entschlüsselten Referenzdaten und/oder den entschlüsselten Verteilungsplan an das Hardwaretoken,
- Authentifizieren des Nutzer-Computersystems gegenüber dem Hardwaretoken,
- Nach erfolgreichem Authentifizieren des Nutzer-Computersystems und falls der Nutzer, dem das Nutzer-Computersystem zugeordnet ist, Zugriffsrechte für die entschlüsselten Referenzdaten und/oder den entschlüsselten Verteilungsplan besitzt, Empfangen der durch das Hardwaretoken mit dem kryptographischen Schlüssel, beispielsweise einem privaten kryptographischen Schlüssel entschlüsselten Referenzdaten und/oder Verteilungsplan.

Nach Ausführungsformen sind die kryptographischen Schlüssel zum Entschlüsseln von verschlüsselten Datenobjekten, wie etwa den Referenzdaten und/oder dem Verteilungsplan auf dem Nutzer-Computersystem oder auf einem Hardwaretoken in einem geschützten Speicherbereich gespeichert.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des Nutzer-Computersystems bzw. Hardwaretokens möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Werden kryptographische Schlüssel auf einem eigenständigen, kryptographisch gesicherten Hardwaretoken gespeichert kann die Sicherheit des vorliegenden Verfahrens zusätzlich erhöht werden. Beispielsweise handelt es sich bei dem Hardwaretoken um eine privatisierte bzw. personalisierte Chipkarte, welche einen Prozessor und einen Speicher umfasst, wobei der private Schlüssel in einem geschützten Speicherbereich des Speichers gespeichert ist. Beispielsweise muss sich der Nutzer als Voraussetzung für eine Verwendung des privaten Schlüssels gegenüber dem Hardwaretoken authentifizieren. Dies kann beispielsweise durch eine ID, wie etwa ein Passwort, ein biometrisches Merkmal oder verhaltensbasiert geschehen. Bei einem biometrischen Merkmal kann es sich beispielsweise um ein Beschleunigungsmuster, Herzschlagfrequenz, Venenmuster, Irismuster, Retinamuster, Stimmenmuster und/oder Fingerabdruck.

Dabei werden die verschlüsselte Datei und der als Voraussetzung für eine Entschlüsselung der Datei notwendige private Schlüssel des Nutzers niemals auf demselben Gerät gespeichert. Selbst wenn es einem Angreifer also gelingt, Zugriff auf eines der Geräte, z.B. das Nutzer-Computersystem oder das Hardwaretoken, zu erlangen, verfügt er doch nicht über alle für eine Entschlüsselung notwendigen Voraussetzungen. Eine Entschlüsselung der Referenzdaten oder zumindest des symmetrischen Schlüssels erfolgt ausschließlich in dem Hardwaretoken, ohne dass der private Schlüssel den Hardwaretoken verlässt.

Zudem wird durch die notwendige Authentifizierung des Nutzer-Computersystems gegenüber dem Hardwaretoken eine zusätzliche Prüfinstanz in das Verfahren eingeführt, wodurch die Sicherheit weiter erhöht wird.

Beispielsweise richten das Nutzer-Computersystem einen sicheren Kommunikationskanal, etwa unter Verwendung einer Ende-zu-Ende-Verschlüsselung, mit dem Hardwaretoken ein und übergibt an diesen die zu entschlüsselnden Referenzdaten. Die Referenzdaten werden in einer sicheren, d.h. kryptographisch geschützten, Umgebung auf dem Hardwaretoken mit dem privaten Schlüssel entschlüsselt. Anschließend werden die entschlüsselten Referenzdaten an das Nutzer-Computersystem unter Verwendung des gesicherten Kommunikationskanals übergeben.

Durch Speicherung des privaten Schlüssels des Nutzers auf dem Hardwaretoken wird das Verfahren zur sicheren Datenaufbewahrung in der Cloud noch sicherer, da nur der Besitzer des Hardwaretokens die Datei entschlüsseln kann und somit Zugriff auf die entsprechenden Daten besitzt. Die sogenannte Skalierbarkeit der Angriffe auf das System bzw. das Verfahren nimmt somit ab, da der private Schlüssel des Nutzers nicht von dem Nutzer- Computersystem, z.B. der Software des Betriebssystems, geschützt wird.

Nach Ausführungsformen wird die Datei mit einem symmetrischen Schlüssel verschlüsselt. Nach Ausführungsformen umfassen die Referenzdaten den symmetrischen Schlüssel. Nach Ausführungsformen ist der symmetrische Schlüssel mit einem öffentlichen kryptographischen Schlüssel eines dem Nutzer zugeordneten asymmetrischen Schlüsselpaars verschlüsselt.

Nach Ausführungsformen ist jedes der Dateifragmente der verschlüsselten Datei zusätzlich mit einem symmetrischen Schlüssel verschlüsselt. Bei diesem symmetrischen Schlüssel, mit dem die Dateifragmente zusätzlich verschlüsselt werden, kann es sich um denselben symmetrischen Schlüssel handeln, mit welchem die Datei verschlüsselt ist oder um einen anderen symmetrischen Schlüssel. Beispielsweise wird für jedes der Dateifragmente jeweils ein individueller Schlüssel generiert. Beispielsweise kann es sich bei den generierten symmetrischen Schlüsseln jeweils um zufällig generierte Schlüssel handeln oder es kann sich bei den Schlüsseln beispielsweise jeweils um einen Kennwert, wie etwa einen Hashwert, des mit dem Schlüssel zu verschlüsselnden Dateifragments handeln. Der oder die symmetrischen Schlüssel, mit welchen die Dateifragmente jeweils zusätzlich verschlüsselt sind, werden ebenfalls von den Referenzdaten umfasst, welche mit dem öffentlichen Schlüssel des Nutzers verschlüsselt sind. Durch die zusätzliche Verschlüsslung der Dateifragmente kann die Sicherheit des Verfahrens weitere erhöht werden.

Nach Ausführungsformen ist das Nutzer-Computersystem einem Nutzer zugeordnet. Das Webserver-Computersystem führt eine Berechtigungsprüfung durch und veranlasst eine Anforderung der Berechtigungstokens nur dann von jedem der in dem Verteilungsplan identifizierten Speicherdienste, falls die Berechtigungsprüfung ergab, dass der Nutzer zum Lesen/Schreiben der Datei berechtigt ist.

Die Prüfung der Zugriffsrechte erfolgt dabei vorzugsweise nur bezogen auf die angeforderte Schreib- und/oder Leseoperation bezüglich der zu schreibenden oder zu lesenden Datei. Dies hat den Vorteil, dass die Zugriffskontrolle sehr feingranular im Hinblick auf einzelne Nutzer, im Hinblick auf die Zeit, und im Hinblick auf einzelne Dateien flexibel und spezifisch erfolgen kann.

Nach Ausführungsformen wird das dem Nutzer zugeordnete asymmetrische Schlüsselpaar im Zuge einer Personalisierung des Hardwaretokens von einer Ausstellungsinstanz, etwa auf einem kryptographisch gesicherten System, generiert und dabei dem Nutzer eindeutig zugeordnet werden. Beispielsweise wird das asymmetrische Schlüsselpaar auf dem Hardwaretoken im Zuge der Herstellung desselben gespeichert. Die Zuordnung zu dem Nutzer kann beispielsweise durch von der Ausstellungsinstanz als Zertifizierungsstelle der PKI oder einer unabhängigen Wurzelzertifizierungsstelle ausgestelltes Zertifikat, welches den öffentlichen Schlüssel umfasst, implementiert werden.

Die Zuordnung zu dem Nutzer kann zusätzlich oder alternativ beinhalten, dass der zugehörige öffentliche Schlüssel, etwa von dem Nutzer-Computersystem, an das Dateimanagementserver-Computersystem übertragen und dort als Bestandteil des Nutzerprofils des entsprechenden Nutzers gespeichert wird.

Nach Ausführungsformen werden die Dateifragmente durch das Nutzer-Computersystem parallel über das Netzwerk von den Speicherdiensten heruntergeladen. Dies kann die Download-Geschwindigkeit der Datei erhöhen.

Unter einer "Ende-zu-Ende-Verschlüsselung" wird hier eine Verschlüsselung einer Verbindung zwischen einem Sender und einem Empfänger verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweite der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer eine Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

Nach Ausführungsformen verwaltet das Webserver-Computersystem öffentliche Schlüssel einer Mehrzahl von Nutzern. Soll einem weiteren Nutzer der Mehrzahl von Nutzern ebenfalls ein Zugriff auf die verteilt gespeicherten Daten ermöglicht werden, umfasst das Verfahren ferner:
- Bereitstellen des öffentlichen Schlüssels des weiteren Nutzers, welchem der Zugriff ermöglicht werden soll, durch die Webanwendung,
- Verschlüsselnder der Referenzdaten der Datei durch die Webanwendung auf dem Nutzer-Computersystem,
- Senden der verschlüsselten Referenzdaten durch die Webabwendung an das Webserver-Computersystem,
- Weiterleiten der verschlüsselten Referenzdaten durch das Webserver-Computersystem an die von einem Webbrowser eines Nutzer-Computersystems des weiteren Nutzers ausgeführte Webanwendung.

Ausführungsformen können den Vorteil haben, dass unterschiedlichen Nutzern Zugriff auf die verteilt gespeicherte Datei gewährt werden kann. Dies kann vorteilhaft sein, da das Webserver-Computersystem zentral die öffentlichen Schlüssel einer Mehrzahl von Nutzern verwalten kann und durch die Weiterleitung sowohl der Referenzdaten als auch der öffentlichen Schlüssel selektiv an berechtigte weitere Nutzer einen besonders hohen Schutz vor unberechtigtem Zugriff gewährleisten kann. Der symmetrische Schlüssel sorgt dafür, dass die Datei verschlüsselt fragmentiert und in den Speichermedien der einzelnen Speicherdienste gespeichert wird und auch der Upload und Download der Dateifragmente somit nur verschlüsselte Daten umfasst. Vorzugsweise wird für jede individuelle Datei ein anderer symmetrischer Schlüssel dynamisch generiert. Die beschriebene Kombination aus einem dateispezifischen symmetrischen Schlüssel zur Ver- und Entschlüsselung der Datei und einem dem Nutzer zugeordneten öffentlichen Schlüssel zur Integration des symmetrischen Schlüssels in die Referenzdaten der Datei kann außerdem vorteilhaft sein, da eine Verschlüsselung bzw. Entschlüsselung großer Datenmengen mittels symmetrischer kryptographische Schlüssel in der Regel deutlich performanter ist als mittels eines asymmetrischen kryptografischen Schlüsselpaars. Der Geschwindigkeitsaspekt ist bei der Verschlüsselung der (vergleichsweise kleinen) Referenzdaten weniger relevant, so dass hier auf eine Verschlüsselung mit einem asymmetrischen kryptografischen Schlüsselpaar zurückgegriffen werden kann, die den Austausch eines zur Entschlüsselung notwendigen Schlüssels ermöglicht, ohne dabei den privaten Schlüssel zu offenbaren. Der privaten Schlüssel ist vielmehr vor unberechtigten Zugriffen geschützt lokal gespeichert.

Falls mehrere Nutzer zum Zugriff auf die verteilt gespeicherte Datei berechtigt sind, kann nach Ausführungsformen für jeden dieser berechtigten Nutzer eine eigene Version von Referenzdaten für die eine verteilt gespeicherte Datei generiert werden, wobei die Referenzdaten durch das Nutzer-Computersystem, das die Datei ursprünglich gemäß dem Verteilungsplan verteilt speicherte, mittels des öffentlichen Schlüssels (Verschlüsselungsschlüssel) des jeweiligen Nutzers verschlüsselt wird.

Nach Ausführungsformen werden die Berechtigungstoken selektiv nur für die Zugriffsanfrage zum Herunterladen der Dateifragmente generiert und besitzen nur temporäre Gültigkeit.

Ausführungsformen können den Vorteil haben, dass das Dateimanagementserver-Computersystem nicht als Router fungiert, was den Schutz der Daten vor unberechtigtem Zugriff durch das Dateimanagementserver-Computersystem gewährleisten kann. Dass die Berechtigungstoken nur eine temporäre Gültigkeit haben kann die Sicherheit des Verfahrens ebenfalls erhöhen. Nach Ablauf einer voreingestellten Zeit, zum Beispiel einigen Sekunden, Minuten oder Tagen, wird das Berechtigungstoken, zum Beispiel eine URL, automatisch ungültig. Die Verwendung von Berechtigung-URLs hat zudem den Vorteil, dass auch Nutzern, die sich nicht bei den einzelnen Speicherdiensten registriert haben, Zugriff auf die Datei gewährt werden kann, da das Webserver-Computersystem zentral die Zugriffsrechte verwaltet. Der Eigentümer der Datei kann spezifisch festlegen, ob die Zugriffsrechte rein lesend und/oder auch schreibend sind. Dies kann die Flexibilität und Zahl der Anwendungsszenarien des Verfahrens enorm erhöhen, da weitere Nutzer sich nur bei dem Webserver-Computersystem registrieren müssen um beispielsweise eine Datei ansehen zu können. Nach manchen Ausführungsformen ist noch nicht einmal dies erforderlich. Beispielsweise könnte auch ein nicht bei dem Webserver-Computersystem registrierter weiterer Nutzer seine Identität gegenüber dem Webserver-Computersystem mittels seines elektronischen Personalausweises nachweisen. Bei Ausführungsformen, bei welchen der Schlüssel, mit dem die Datei verschlüsselt wurde, mit dem öffentlichen Schlüssel eines berechtigten Nutzer-Computersystems verschlüsselt wird, kann allerdings eine Registrierung für die zentrale Hinterlegung des öffentlichen Verschlüsselungsschlüssels des Nutzer-Computersystems erforderlich sein.

Jede URL kann beispielsweise aus einer Pfadangabe sowie weiteren Angaben bestehen. Die Pfadangabe kann zum Beispiel eine ID des Speicherdienstes sowie eine Pfadangabe des entsprechenden Speicherplatzes auf dem Speichermedium des Speicherdienstes beinhalten. Die weiteren Angaben können zum Beispiel Parameterwerte umfassen, aus welchen die Berechtigung des Nutzers zum Zugriff auf den besagten Speicherplatz hervorgeht und die von dem Speicherdienst geprüft werden, wenn das Nutzer-Computersystem über die besagte URL auf das Dateifragment zugreift.

Nach Ausführungsformen ist ein Signierschlüssel in einem geschützten Speicherbereich des Speichers des Dateimanagementserver-Computersystems gespeichert. Das Verfahren umfasst ferner:
- Bereitstellen eines dem Signierschlüssel zugeordneten Signaturprüfschlüssels an jeden der Speicherdienste, wobei der Signaturprüfschlüssel zum Prüfen von Signaturen ausgebildet ist, welche mit dem Signierschlüssel generiert sind,
- Signieren der Berechtigungstoken mit dem Signierschlüssel durch das Dateimanagementserver-Computersystem, wobei die Berechtigungstoken in signierter Form an das Nutzer-Computersystem weitergeleitet werden,
- wobei jedes der signierten Berechtigungstoken den Zugriff auf den durch das jeweilige Berechtigungstoken identifizierten Speicherplatz auf dem Speichermedium des jeweiligen Speicherdienstes unter der Voraussetzung ermöglicht, dass der Speicherdienst die Signatur als valide erkennt.

Ausführungsformen können den Vorteil haben, dass es den einzelnen Speicherdiensten ermöglicht wird, eine Signaturprüfung zur Erhöhung der Sicherheit der durch sie gespeicherten Daten auszuführen. Nach Ausführungsformen erfolgt die Signierung der Berechtigungstoken sowohl für Berechtigungstoken, die einen Lesezugriff auf eine bereits verteilt gespeicherte Datei ermöglichen wie auch für Berechtigungstoken die einen Schreibzugriff zur verteilten Speicherung einer Datei gewähren.

Nach Ausführungsformen ist ein Mindestvertrauensniveau festgelegt, welches ein Mindestmaß an Verlässlichkeit für das Authentifizierungsverfahren spezifiziert, mittels welchem sich das Nutzer-Computersystem des Nutzers gegenüber dem Webserver-Computersystem authentifizieren muss, um auf die in den Speichermedien der identifizierten Speicherdienste gespeicherten Datei zugreifen zu dürfen.

Das Verfahren umfasst ferner ein Prüfen durch das Webserver-Computersystem, ob das zum Authentifizieren des Nutzer-Computersystems gegenüber dem Webserver-Computersystem verwendete Authentifizierungsverfahren hinreichend verlässlich ist, um das für den Nutzer festgelegte Mindestvertrauensniveau für den angeforderten Zugriff zu erfüllen. Die Anforderung des Berechtigungstokens wird nur dann von dem Webserver-Computersystem veranlasst, falls das zum Authentifizieren des Nutzer-Computersystems gegenüber dem Webserver-Computersystem verwendete Authentifizierungsverfahren ein Vertrauensniveau hat, welches mindestens so hoch ist wie das festgelegte Mindestvertrauensniveau.

Das Mindestvertrauensniveau kann von dem Nutzer konfiguriert und geändert werden. Das Mindestvertrauensniveau spezifiziert ein von dem Nutzer festgelegtes Mindestmaß an Verlässlichkeit eines Authentifizierungsverfahrens, mittels welchem sich ein weiterer Nutzer gegenüber einem Webserver-Computersystem authentifizieren muss, um lesend und/oder schreibend auf die in den Speichermedien der identifizierten Speicherdienste gespeicherten Datei zugreifen zu dürfen. Dies kann vorteilhaft sein, da dem Nutzer eine konfigurierbare und feingranulare (auf Dateiebene befindliche) Kontrolle im Hinblick auf den Zugriff auf diese Datei durch andere Nutzer gegeben wird. Der Nutzer kann zum Beispiel ausschließen, dass eine Datei, die besonders vertrauliche und schützenswerte Informationen beinhaltet, von einem Nutzer eingesehen werden kann, welcher sich nur mit einem vergleichsweise einfach zu knackenden Authentifizierungsverfahren (zum Beispiel Benutzername-Passwort) gegenüber dem Webserver-Computersystem authentifiziert hat.

Nach Ausführungsformen umfasst das Verfahren ferner:
- ein Ermitteln der zu erwartenden Gesamtgröße aller durch das Fehlerkorrekturverfahren gemäß Verteilungsplan zu generierenden Dateifragmente beinhaltet, wobei für jedes der zu generierenden Dateifragmente ein Speicherdienst identifiziert wird,
- falls das ermittelte Fehlerkorrekturverfahren die Generierung von Dateifragmenten bewirken würde, deren Gesamtgröße es nicht ermöglicht, eine hinreichende Anzahl von Speicherdiensten zu identifizieren, die gemäß deren Angaben den Anforderungen hinsichtlich der Geschwindigkeit und/oder Sicherheit unter Berücksichtigung der Gesamtgröße genügen, automatisches Ermitteln eines alternativen Fehlerkorrekturverfahrens, welches dazu konfiguriert ist, Dateifragmente zu erzeugen, deren zu erwartende Gesamtgröße hinreichend klein ist.

Ein "Wort" des Fehlerkorrekturverfahrens ist eine Bitgruppe, die die kleinste Einheit darstellt, in Bezug auf welche ein Fehler festgestellt und gegebenenfalls korrigiert wird. Häufig werden 8 Bit als Wortlänge verwendet. Aus einer Bit-Wortlänge ergibt sich eine feste Größe an Daten die korrigiert werden können.

Die Ermittlung des Fehlerkorrekturverfahrens, das in dem Verteilungsplan spezifiziert werden soll kann eine Ermittlung von Konfigurationsparametern des Fehlerkorrekturverfahrens beinhalten. Zu den Konfigurationsparametern können z.B. gehören: eine Wortlänge W, eine Anzahl K von Dateipartitionen ohne Berücksichtigung der Fehlerkorrekturbits, und/oder eine Anzahl M der Dateipartitionen K, deren Verlust durch den Informationsgehalt der Fehlerkorrekturbits notfalls kompensiert werden soll. Eine "Dateipartition" ist hier ein zunächst generiertes Dateifragment, das noch keinerlei Fehlerkorrekturbit enthält. Aus diesen zunächst generierten Dateipartitionen können die eigentlichen Dateifragmente mit den Fehlerkorrekturbits berechnet werden, die schließlich an die Speicherdienste übertragen werden.

Beispielsweise könnte die Dateigröße der zu speichernden Datei in die Ermittlung des Fehlerkorrekturverfahrens eingehen. Die zu speichernde Datei könnte eine Dateigröße von "10 Mb" besitzen.

Nach einem ersten Beispiel könnte die Anzahl der Dateipartitionen K "4" betragen. Dies bedeutet, dass das Fehlerkorrekturverfahren die zu speichernde Datei zunächst in 4 Dateipartitionen der Größe 2,5 Mb aufteilt. Die Anzahl M der Dateipartitionen, deren Verlust ggf. kompensiert werden soll, könnte "1" betragen. Die Konfigurationsparameter K=4 und M=1 bewirken, dass das Fehlerkorrekturverfahren insgesamt 5 Dateifragmente generiert, die je 10 Mb/4 = 2,5 Mb groß sind. Insgesamt würde ein Fehlerkorrekturalgorithmus mit der exemplarischen K = 4, M = 1 Konfiguration 12,5 Mb Daten aus der ursprünglichen 10 Mb großen Ausgangsdatei erzeugen. Vier der Dateifragmente könnten aus den Dateipartitionen bestehen und somit rein aus Dateidaten bestehen während das fünfte Dateifragment völlig aus Fehlerkorrekturbits bestehen könnte. Gemäß einem zweiten Beispiel könnten die Konfigurationsparameter K = 4 und M = 2 betragen und bewirken, das Fehlerkorrekturverfahren insgesamt 6 Dateifragmente generiert, 2 davon bestehen aus Fehlerkorrekturbits, 4 bestehen aus Dateipartitionen. Aus der Ausgansdatei werden insgesamt 6*2,5 Mb = 15 Mb Daten erzeugt.

Neben Fehlerkorrekturverfahren, welche Dateifragmente generieren, die entweder aus Dateipartitionen oder reinen Fehlerkorrekturdaten bestehen, können in anderen Ausführungsformen auch Fehlerkorrekturverfahren verwendet werden, bei welches jede generierte Dateifragment einen ersten Anteil bestehend rein aus Dateidaten und einen zweiten Anteil bestehend aus Fehlerkorrekturbits beinhaltet. In dem oben genannten ersten Beispiel mit K = 4 und M = 1 für eine 10 Mb Datei könnten z.B. 5 Dateifragmente a 2,5 Mb generiert werden, die pro Dateifragment 2,5 MB/5 = 0,5 Mb Fehlerkorrekturbits beinhalten. In dem oben genannten zweiten Beispiel mit K = 4 und M = 2 für die 10MB Datei könnten z.B. 6 Dateifragmente a 2,5 Mb generiert werden, die jeweils (2*2,5 Mb)/6 = 0,83 Mb Fehlerkorrekturbits beinhalten.

Die Konfigurationsparameter K und M sind nach manchen Ausführungsformen dem Webserver-Computersystem standardmäßig vorkonfiguriert, können jedoch in Abhängigkeit von Merkmalen der Datei dynamisch geändert werden um eine optimierte Verteilung der Dateifragmente zu bewirken. Die dynamischen Konfigurationsparameter werden in den generierten Verteilungsplan integriert um das darin identifizierte Fehlerkorrekturverfahren näher zu charakterisieren. Mit steigender Anzahl M der verlustkompensierbaren Dateipartitionen wird die Verfügbarkeit und Ausfallsicherheit der verteilt gespeicherten Datei erhöht, allerdings erhöht sich bei unverändertem K auch die Größe der einzelnen Dateifragmente.

Nach manchen Ausführungsformen werden die Konfigurationsparameter M und/oder K des in dem Verteilungsplan spezifizierten Fehlerkorrekturverfahren so ermittelt, dass mit steigenden Anforderungen des Nutzers an die Verfügbarkeit der Datei nicht nur M steigt, sondern auch K. Als Konsequenz dessen wird auch die Anzahl der von dem Fehlerkorrekturverfahren zu generierenden Dateifragmente erhöht um die Größe der einzelnen Dateifragmente annähernd konstant zu halten und eine gleichbleibend kurze Übertragungszeit bei parallelem Dateifragment-Upload zu gewährleisten. Ggf. müssen in diesem Fall auch die Anzahl der zur parallelen Speicherung der Dateifragmente verwendeten und in dem Verteilungsplan spezifizierten Speicherdienste erhöht werden.

Ausführungsformen umfassen ferner ein Nutzer-Computersystem. Das Nutzer-Computersystem umfasst einen Prozessor, eine Netzwerkschnittstelle zur operativen Kopplung des Nutzer-Computersystems an ein Webserver-Computersystem und eine Mehrzahl von Speicherdiensten über ein Netzwerk. Das Nutzer-Computersystem umfasst ferner ein Speichermedium mit einem von dem Prozessor ausführbaren Webbrowser. Der Webbrowser ist zur Ausführung folgenden Verfahrens zum kryptographisch gesicherten Speichern einer Datei unter Verwendung einer von dem Webbrowser ausgeführten Webanwendung konfiguriert:
- Aufrufen der Webanwendung von dem Webserver-Computersystem über das Netzwerk durch den Webbrowser auf dem Nutzer-Computersystem,
- Verschlüsseln der Datei mit einem kryptographischen Schlüssel auf dem Nutzer-Computersystem durch die Webanwendung,
- Bereitstellen eines Verteilungsplans durch die Webanwendung, wobei der Verteilungsplan Instruktionen zum Fragmentieren der Datei in eine Mehrzahl von Dateifragmenten mittels eines Fehlerkorrekturverfahrens und Identifikatoren der Mehrzahl von Speicherdiensten umfasst, in deren nichtflüchtigen Speichermedien die erzeugten Dateifragmente gespeichert werden sollen,
- Fragmentieren der verschlüsselten Datei auf dem Nutzer-Computersystem durch die Webanwendung in eine Mehrzahl von Dateifragmente mittels des Fehlerkorrekturverfahren gemäß dem Verteilungsplan, wobei zumindest eines der Dateifragmente Fehlerkorrekturbits beinhaltet,
- Senden der resultierenden Dateifragmente durch die Webanwendung über das Netzwerk an die von dem Verteilungsplan identifizierten Speicherdienste, wobei von dem Webserver-Computersystem für jeden der Speicherdienste jeweils ein Berechtigungstoken als Berechtigungsnachweis zum Speichern des entsprechenden Dateifragments bereitgestellt wird.

Das Nutzer-Computersystem ist dazu konfiguriert ein oder mehrere der vorangehenden Ausführungsformen des Verfahrens auszuführen.

Ausführungsformen umfassen ferner ein Webserver-Computersystem. Das Webserver-Computersystem umfasst einen Prozessor und eine Netzwerkschnittstelle zur operativen Kopplung des Webserver-Computersystems an ein Nutzer-Computersystem. Das Webserver-Computersystem umfasst ferner ein Speichermedium mit Programminstruktionen. Die Programminstruktionen sind dazu konfiguriert bei einem Ausführen durch den Prozessor, in Antwort auf ein Empfangen eines Aufrufs einer Webanwendung von einem Webbrowser des Nutzer-Computersystems über das Netzwerk, Programminstruktionen zum Ausführen der Webanwendung in einem Webbrowser auf dem Nutzer-Computersystem über das Netzwerk an das Nutzer-Computersystem zu senden. Die Webanwendung ist zur Ausführung folgenden Verfahrens zum kryptographisch gesicherten Speichern einer Datei konfiguriert:
- Verschlüsseln der Datei mit einem kryptographischen Schlüssel auf dem Nutzer-Computersystem durch die Webanwendung,
- Bereitstellen eines Verteilungsplans durch die Webanwendung, wobei der Verteilungsplan Instruktionen zum Fragmentieren der Datei in eine Mehrzahl von Dateifragmenten mittels eines Fehlerkorrekturverfahrens und Identifikatoren einer Mehrzahl von Speicherdiensten umfasst, in deren nichtflüchtigen Speichermedien die erzeugten Dateifragmente gespeichert werden sollen,
- Fragmentieren der verschlüsselten Datei auf dem Nutzer-Computersystem durch die Webanwendung in eine Mehrzahl von Dateifragmente mittels des Fehlerkorrekturverfahren gemäß dem Verteilungsplan, wobei zumindest eines der Dateifragmente Fehlerkorrekturbits beinhaltet,
- Senden der resultierenden Dateifragmente durch die Webanwendung über das Netzwerk an die von dem Verteilungsplan identifizierten Speicherdienste, wobei von dem Webserver-Computersystem für jeden der Speicherdienste jeweils ein Berechtigungstoken als Berechtigungsnachweis zum Speichern des entsprechenden Dateifragments bereitgestellt wird.

Das Webserver-Computersystem ist dazu konfiguriert ein oder mehrere der vorangehenden Ausführungsformen des Verfahrens auszuführen.

Nach Ausführungsformen ist das Webserver-Computersystem ferner dazu konfiguriert, über die Webanwendung einen Dienst bereitzustellen, wobei die zu speichernde Datei im Zuge eines Ausführens des Dienstes durch die Webanwendung erzeugt werden.

Ausführungsformen umfassen ferner ein System mit einem Dateimanagementserver-Computersystem, einem Webserver-Computersystem und zumindest einem Nutzer-Computersystem. Das Dateimanagementserver-Computersystem umfasst einen Prozessor und eine Netzwerkschnittstelle zur operativen Kopplung des Dateimanagementserver-Computersystems mit dem Webserver-Computersystem, mit dem zumindest einen Nutzer-Computersystem und mit einer Mehrzahl von Speicherdiensten über ein Netzwerk. Das Dateimanagementserver-Computersystem umfasst ein Speichermedium mit Programminstruktionen. Die die Programminstruktionen sind dazu konfiguriert bei einem Ausführen durch den Prozessor zum Ausführen folgenden Verfahrens zum kryptographisch gesicherten Speichern einer Datei konfiguriert:
- Empfangen einer Berechtigungsanfrage des Webserver-Computersystem zum Speichern von Dateifragmenten der Datei über das Netzwerk in der Mehrzahl von Speicherdiensten gemäß einem Verteilungsplan, wobei das Dateimanagementserver-Computersystem keinen der Speicherdienst bereitstellt,
- In Antwort auf das Empfangen der Berechtigungsanfrage, Anfordern eines Berechtigungstokens von jedem der mehreren Speicherdienste und Weiterleitung der in Antwort auf das Anfordern erhaltenen Berechtigungstoken an das zumindest eine Nutzer-Computersystem,
- Speichern des Verteilungsplans, wobei der Verteilungsplan Instruktionen zum Defragmentieren der Datei aus einer Mehrzahl von Dateifragmenten mittels eines Fehlerkorrekturverfahrens und Identifikatoren der Mehrzahl von Speicherdiensten umfasst, in deren nichtflüchtigen Speichermedien die Dateifragmente gespeichert sind.

Das Dateimanagementserver-Computersystem ist dazu konfiguriert ein oder mehrere der vorangehenden Ausführungsformen des Verfahrens auszuführen.

Ein "Verteilungsplan" im Sinne der vorliegenden Erfindung ist eine Spezifikation, welche zumindest Angaben über die Identität derjenigen Speicherdienste enthält, über welche Fragmente einer Datei gespeichert werden sollen sowie Angaben enthält, die einen Fehlerkorrekturverfahren festlegen, welches zur Generierung dieser Dateifragmente aus der besagten Datei verwendet werden soll. Ein Verteilungsplan kann z.B. als XML Datei oder binäre Datei ausgebildet sein.

Ein "Dateimanagementserver" bzw. "Dateimanagementserver-Computersystem" ist ein Computersystem, welches eine Schnittstelle zur Kommunikation mit ein oder mehreren Nutzer-Computersystemen und zur Kommunikation mit mehreren Speicherdiensten besitzt um den ein oder mehreren Nutzer-Computersystemen Zugriffsrechte auf von diesen Speicherdiensten verwaltete Speichermedien zu vermitteln. Das Dateimanagementserver-Computersystem stellt dabei selbst keinen Speicherdienst bereit und ist vorzugsweise auch von den Speicherdiensten durch sicherheitstechnische Maßnahmen getrennt, welche dafür sorgen, dass keiner dieser Speicherdienste Zugriff auf von dem Dateimanagementserver-Computersystem verwaltete Daten, insbesondere z.B. Nutzerprofile und Referenzdaten, hat. Das Dateimanagementserver-Computersystem kann aus einem Datenverarbeitungsgerät bestehen oder aus mehreren Datenverarbeitungsgeräten, insbesondere Computern, bestehen, die zusammenwirken und gemeinsam verwaltet werden um die Funktionalität des Dateimanagementserver-Computersystems gemäß den oben beschriebenen Ausführungsformen bereitzustellen.

Ein "Berechtigungstoken" ist eine Datenstruktur, z.B. eine Datei oder eine URL, welche Informationen beinhaltet, die einer Instanz, die im Besitz dieses Berechtigungstokens ist, eine Berechtigung zum Zugriff auf Speicherbereiche externer Speichermedien einräumt. Die externen Speichermedien können z.B. von einem Speicherdienst über ein Netzwerk wie z.B. das Internet bereitgestellt werden. Nach Ausführungsformen kann das Berechtigungstoken sowohl einen Zeiger als auch einen Berechtigungsausweis enthalten. Der Zeiger kann z.B. aus einer Kombination aus einer IP Adresse eines Speicherdienstes und eines Dateipfades eines von diesem Speicherdienst verwalteten Speichermediums bestehen. Der Berechtigungsausweis kann z.B. ein oder mehrere Datenwerte beinhalten, die den Besitzer des Berechtigungstokens als zugriffsberechtigt ausweisen, z.B. einen von dem Speicherdienst generierten Zufallswert der mit einem Referenzwert verglichen werden kann. Die besagten Datenwerte können auch eine Signatur umfassen.

Ein "Speicherdienst" ist ein über ein Netzwert bereitgestellter Dienst, der es ein oder mehreren Nutzer-Computersystemen ermöglicht, Daten über das Netzwerk an den Dienst zu senden damit diese von dem Speicherdienst auf ein oder mehreren von dem Speicherdienst verwalteten Speichermedien gespeichert werden, und/oder der es den Nutzer-Computersystemen ermöglicht, auf bereits von diesem oder einem anderen Nutzer-Computersystem gespeicherte Daten über das Netzwerk - z.B. lesend oder schreibend - zuzugreifen. Ein einzelner Speicherdienst ist dabei von jedem anderen Speicherdienst vorzugsweise technisch und organisatorisch getrennt. Nach Ausführungsformen ist jeder der Speicherdienste dazu konfiguriert, über eine Schnittstelle Daten von dem Nutzer-Computersystem über das Netzwerk zu empfangen und diese in seinem nicht flüchtigen Speichermedium zu speichern.

Unter einem "Nutzer-Computersystem" wird im Folgenden ein Datenverarbeitungssystem, z.B. ein Desktop-PC, ein Notebook oder ein Smartphone verstanden, welches einem Nutzer zugeordnet ist.

Unter einem "Hardwaretoken" bezeichnet ein tragbares elektronisches Gerät, welches einen Prozessor zum Ausführen von Programminstruktionen und einen Speicher zum Speichern von Programminstruktionen umfasst. Bei dem Hardwaretoken handelt es sich beispielsweise um ein Telekommunikationsgerät, wie etwa ein Smartphone. Ferner kann es sich bei dem Hardwaretoken um ein ID-Token handeln. Der Begriff "ID-Token" bezeichnet eine Vorrichtung, wie beispielsweise ein tragbares elektronisches Gerät, zum Beispiel einen sogenannten USB-Stick, eine Chipkarte, oder ein Dokument.

Unter einem "Dokument" wird insbesondere ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem ID-Token um ein Machine-Readable Travel Document, wie beispielsweise von der Internationalen Luftfahrtbehörde (ICAO) und/oder dem BSI standardisiert, handeln.

Nach Ausführungsformen weist der ID-Token keine eigene Energieversorgung auf. Als Energiequelle kann vielmehr eine Vorrichtung zum "Ernten" (energy harvesting) von Energie dienen, welche von dem Terminal an das ID Token übertragen wird, wie beispielsweise eine RFID-Antenne.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der **PKI** ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der **PKI** zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Mehrzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter und/oder einen ZDA, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein Hashwert, welcher mit einem privaten Schlüssel eines kryptographischen Schlüsselpaares verschlüsselt ist, das einem Zertifikat zugeordnet ist. Die Besonderheit einer solchen Signatur besteht darin, dass deren Urheberschaft und Zugehörigkeit zu einer bestimmten Person oder Instanz durch jeden Dritten geprüft werden kann.

Unter einem "Speicher" bzw. "Speichermedium" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen mit dem Speicher gekoppelten Prozessor möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Bei einem "Computer" bzw. einem "Computersystem" kann es sich zum Beispiel um einen Personal Computer (PC) oder einen Laptop handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet, ein Energieversorgungsnetz oder ein anderes Kommunikationsnetz. Je nach Ausführungsform kann diese Verbindung auch über ein Mobilfunknetz hergestellt werden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Unter einem "Netzwerk" wird hier jedes Übertragungsmedium mit einer Anbindung zur Kommunikation verstanden, insbesondere eine lokale Verbindung oder ein lokales Netzwerk, insbesondere ein PAN (Personal Area Network), LAN (Local Area Network), ein privates Netzwerk, insbesondere ein Intranet, und ein virtuelles privates Netzwerk (Virtual Private Network - VPN). Ein Netzwerk kann vollständig oder teilweise als Mobilfunknetz bzw. Mobilfunknetzwerk konfiguriert sein. Beispielsweise kann ein Computersystem bzw. Mobilfunkgerät eine Mobilfunkschnittstelle zur Anbindung an das Mobilfunknetz aufweisen. Ferner kann es sich um ein öffentliches Netzwerk, wie beispielsweise ein MAN (Metropolitan Area Network), WAN (Wide Area Network), GAN (Global Area Network), oder das Internet handeln. Je nach Ausführungsform kann diese Verbindung auch über ein Mobilfunknetz hergestellt werden.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Webbrowser" wird hier ein Computerprogramm zum Abrufen und Darstellen Dokumenten und Daten über ein Netzwerk, insbesondere zum Abrufen und Darstellen von Webseiten im World Wide Web verstanden. Beispielsweise können beliebige Hyperlinks, insbesondere als Verbindung zwischen Webseiten, mit Hilfe eines Webbrowsers aufgerufen werden. Neben HTML-Seiten können Webbrowser verschiedene andere Arten von Dokumenten, wie Bild, Video oder Text Dateien anzeigen. Ein Webbrowser ist insbesondere dazu konfiguriert eine Benutzeroberfläche, d.h. Nutzer-Schnittstelle, für Webanwendungen bereitzustellen.

Unter einem "Vertrauensniveau" wird im Folgenden eine Menge von ein oder mehreren Parameterwerten verstanden, welche einen Grad der Vertrauenswürdigkeit in Bezug darauf angibt, ob ein Nutzer, der sich mit einem ihm zugeordneten Nutzer-Computersystem gegenüber dem Dateimanagementserver-Computersystem authentifiziert hat, auch tatsächlich derjenige ist, der er durch Bereitstellung seiner Authentifizierungsdaten vorgibt zu sein.

Ein "Fehlerkorrekturbit" oder "Paritätsbit" ist ein Bit, welches zusätzlich zu ein oder mehreren Bits der eigentlichen Nutzdaten generiert und ggf. an einen Empfänger übertragen wird, und welches zur Kontrolle der Integrität der besagten ein oder mehreren Bits der Nutzdaten während der Übertragung an den Empfänger dient.

Ein "Fehlerkorrekturverfahren" ist ein Verfahren, welches dazu dient, Fehler bei der Speicherung und Übertragung von Daten zu erkennen und zu korrigieren, wobei ein Fehler auch darin bestehen kann, dass Teile einer logisch zusammenhängenden Datenmenge (z.B. eine Datei) temporär oder dauerhaft nicht verfügbar sind, z.B. wegen Ausfalls eines Speichermediums, das diese Teile gespeichert hatte. Um dies zu erreichen fügen Fehlerkorrekturverfahren vor der Speicherung oder Übertragung von Nutzdaten diesen Nutzdaten zusätzliche Redundanz in Form zusätzlicher Fehlerkorrekturbits hinzu, die zur Bestimmung von Fehlern und Fehlerpositionen und auch zur Rekonstruktion fehlender Teile der Nutzdaten genutzt werden können.

Im Weiteren werden Ausführungsformen der Erfindung mit Bezugnahme auf die Zeichnungen näher erläutert. Es zeigen:
- Figur 1: ein Blockdiagramm mit einem Nutzer-Computersystem, einem Webserver-Computersystem, mehreren Speicherdiensten und einem Dateimanagementserver-Computersystem,
- Figur 2: ein Blockdiagramm mit mehreren Nutzer-Computersystemen, einem Webserver-Computersystem, mehreren Speicherdiensten und einem Dateimanagementserver-Computersystem,
- Figur 3: ein Blockdiagramm eines Nutzer-Computersystems,
- Figur 4: ein Blockdiagramm eines Webserver-Computersystems,
- Figur 5: ein Blockdiagramm eines Dateimanagementserver-Computersystems,
- Figuren 6: ein Ablaufschema einer verteilten Speicherung einer Datei,
- Figuren 7: ein Ablaufschema eines Lesens einer verteilt gespeicherten Datei,
- Figur 8: ein Flussdiagramm einer verteilten Speicherung einer Datei,
- Figur 9: ein Flussdiagramm eines Lesens einer verteilt gespeicherten Datei.

Elemente der nachfolgenden Ausführungsformen, die einander entsprechen, werden mit denselben Bezugszeichen gekennzeichnet.

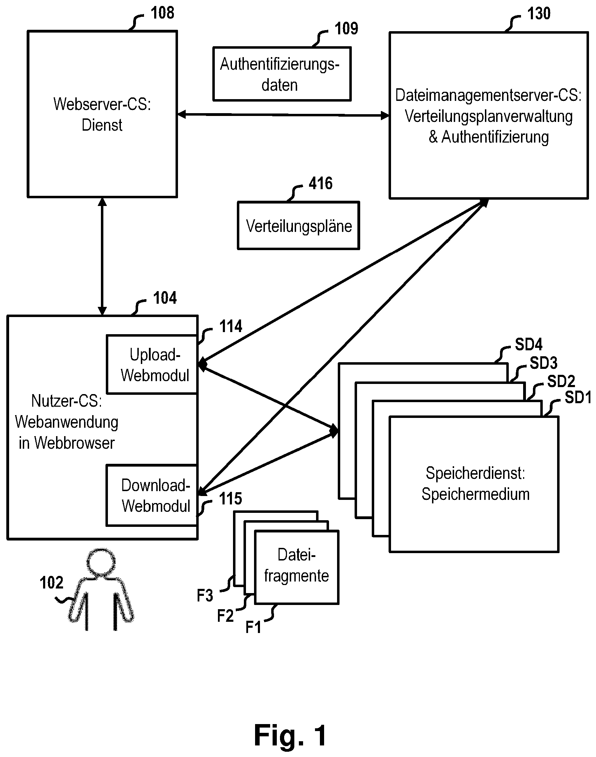

Figur 1 zeigt eine verteilte Infrastruktur zum kryptographisch gesicherten Speichern von Dateien unter Verwendung einer auf einem Webbrowser ausgeführten Weban- wendung. Die Infrastruktur umfasst ein Nutzer-Computersystem 104, welches einen Webbrowser zum Ausführen einer Webanwendung umfasst. Die entsprechende Webanwendung wird von einem Webserver-Computersystem 108 zum Abrufen über ein Netzwerk, wie etwa das Internet, mittels eines Webbrowsers bereitgestellt. Bei der Webanwendung handelt es sich beispielsweise um eine bestehende Webanwendung, über welche Dienste des Webserver-Computersystem 108 gemäß einem Client-Server-Protokoll abgerufen werden können. Diese Webanwendung wird durch ein Upload-Webmodul zum Hochladen von Dateien zum Speichern sowie ein Download-Webmodul zum Herunterladen von Dateien für einen Zugriff ergänzt, welche in die Webanwendung eingebunden sind und es dieser ermöglichen ohne zusätzliche Programme Dateien in Form von kryptographisch gesicherten Dateifragmenten F1-F3 verteilt zu speichern und abzurufen.

Zur Speicherung werden die Dateien kryptographisch gesichert, indem sie verschlüsselt und fragmentiert werden, sodass anhand einzelner Dateifragmente F1-F3 keine Rückschlüsse über den Dateninhalt der Ursprungsdatei gezogen werden können. Die Fragmentierung erfolgt gemäß einem Verteilungsplan 416, welcher zudem die Speicherdienste SD1-SD4 identifiziert auf welchen die Dateifragmente F1-F3 jeweils gespeichert werden sollen. Die entsprechenden Verteilungspläne 416 werden beispielsweise von einem Dateimanagementserver-Computersystem 130 gespeichert verwaltet. Erzeugt werden können die entsprechenden Verteilungspläne 416 beispielsweise durch das Webserver-Computersystem oder das Dateimanagement-Computersystem 130. Werden dem Nutzer-Computersystem 104 die notwendigen Informationen bezüglich der Speicherdienste SD1-SD6 beispielsweise über die Webanwendung bereitgestellt, kann auch das Nutzer-Computersystem 104 den Verteilungsplan durch die Webanwendung erstellen.

Gegenüber dem Dateimanagementserver-Computersystem 130 authentifiziert sich Webserver-Computersystem 108 mit den Authentifizierungsdaten 109, um einem oder mehreren Nutzer-Computersystem 104 über die Webanwendung die Upload- und Download-Funktionalität zur Verfügung zu stellen. Der Nutzer 102 muss sich weder bei dem Dateimanagementserver-Computersystem 130 noch bei den Speicherdiensten SD1-SD4 registrieren. Ferner verwaltet das Webserver-Computersystem 108 Referenzdaten, welche die Dateien mit den Verteilungsplänen 416 und den Nutzern 102 der Nutzer-Computersysteme 102 verknüpft. Unter Rückgriff auf die entsprechenden Referenzdaten kann das Webserver-Computersystem 108 dem Nutzer 102 jederzeit den Zugriff auf die verteilt gespeicherten Daten im Zuge eines Ausführens der Webanwendung in dem Webbrowser auf dem Nutzer-Computersystem 104 ermöglichen.

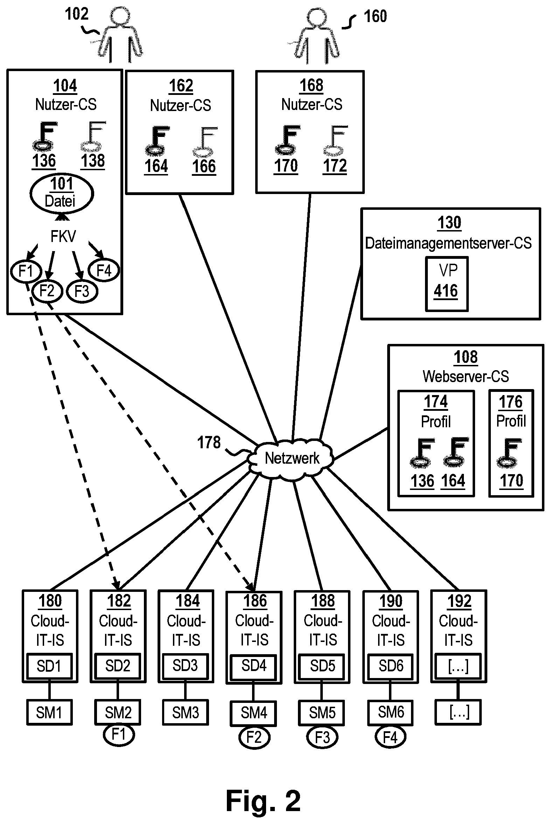

Figur 2 zeigt eine verteilte Infrastruktur zur Speicherung von Dateien, welche mehrere Nutzer-Computersysteme 104, 162, 168, ein Webserver-Computersystem 108, mehrere Speicherdienste SD1-SD6 mit entsprechenden eigenen IT-Infrastrukturen 180-192 und Speichermedien SM1-SM6 sowie ein Dateimanagementserver-Computersystem 130 umfasst, die jeweils über ein Netzwerk 178 miteinander kommunikativ bzw. operativ verbunden sind. Das System ermöglicht eine automatisierte und dynamische Bereitstellung von Speicherressourcen der einzelnen Speicherdienste, die zum Beispiel jeweils als öffentliche Cloud-Speicherdienste ausgebildet sein können. Die Bereitstellung ist dabei als eine Funktionalität in eine von dem Webserver-Computersystem 108 über das Netzwerk 178 bereitgestellte Webanwendung eingebunden. Die Auswahl der Speicherdienste erfolgt vorzugsweise dynamisch basierend auf Anforderungen, die das Webserver-Computersystem 108 festlegt. Beispielsweise wird ein Mindestniveau an Sicherheit verlangt. Für ein Speichern in Frage kommende bzw. zur Verfügung stehende Speicherdienste SD1-SD6 werden beispielsweise in einem zentral gespeicherten Katalog 329 des Webserver-Computersystems 108 oder des Dateimanagementserver-Computersystems 130 hinterlegt.

Dem Nutzer 102 können beispielsweise zwei Nutzer-Computersysteme 104, 162, zum Beispiel ein Desktop-Computer und ein Notebook, zugeordnet sein, welche jeweils über eine Netzwerkschnittstelle und einen Webbrowser verfügen.

Beispielsweise umfasst jedes der Nutzer-Computersysteme 104, 162 ein spezifisches asymmetrisches kryptographisches Schlüsselpaar 136, 138; 164,166. Der private Schlüssel 138, 166 wird in dem jeweiligen Nutzer-Computersystem geschützt gespeichert. Kopien der entsprechenden öffentlichen Schlüssel 136, 164 werden an das Webserver-Computersystem 108 übertragen und von diesem zentral verwaltet. Ferner kann auch das Dateimanagementserver-Computersystems 130 über Kopien der entsprechenden öffentlichen Schlüssel 136, 164 verfügen. So ist dem Nutzer 102 beispielsweise das Nutzerprofil 174 zugeordnet, welches die beiden öffentlichen Schlüssel 136 und 164 beinhaltet. Dem weiteren Nutzer 160 ist das Nutzerprofil 176 zugeordnet, welches den öffentlichen Schlüssel 170 beinhaltet. Der zu dem öffentlichen Schlüssel 170 korrespondierende private Schlüssel 172 ist auf dem weiteren Nutzer-Computersystem 168 geschützt gespeichert. Dadurch wird das Webserver-Computersystem 108 das in die Lage versetzt beispielsweise Referenzdaten durch eine Verschlüsselung mit einem der öffentlichen Schlüssel so kryptographisch zu schützen, dass nur der Besitzer des zughörigen privaten Schlüssels auf diese zugreifen kann. Nach Ausführungsformen kann der private Schlüssel eines Nutzers auch auf einem mobilen, tragbaren Hardwaretoken gespeichert sein, sodass der Nutzer diesen an einer Mehrzahl von Nutzer-Computersysteme 104, 162 nutzen kann. Verfügt das Dateimanagementserver-Computersystems 130 ebenfalls über Kopien der entsprechenden öffentlichen Schlüssel, kann dieses beispielsweise die Verteilungspläne 416 in analoger Weise verschlüsseln.

Die beiden gestrichelten Pfeile von Figur 2 deuten in Bezug auf die Dateifragmente F1 und F2 an, dass die durch das Fehlerkorrekturverfahren FKV aus der Datei 101 erzeugten Dateifragmente F1-F4 direkt, mithilfe eines Berechtigungstokens, unter Umgehung des Webserver-Computersystems 108 und Dateimanagementserver-Computersystems 130 gespeichert werden. Für den Erhalt der Berechtigungstoken, die von den einzelnen Speicherdiensten ausgestellt werden, ist jedoch eine Interaktion des Nutzer-Computersystems 104 mit dem Webserver-Computersystem 108 über die Webanwendung notwendig, welches das Dateimanagementserver-Computersystems 130 zum Anfordern der Berechtigungstoken veranlasst. Das Webserver-Computersystems 108 agiert als zentrale Instanz zur Organisation des verteilten Speicherns.

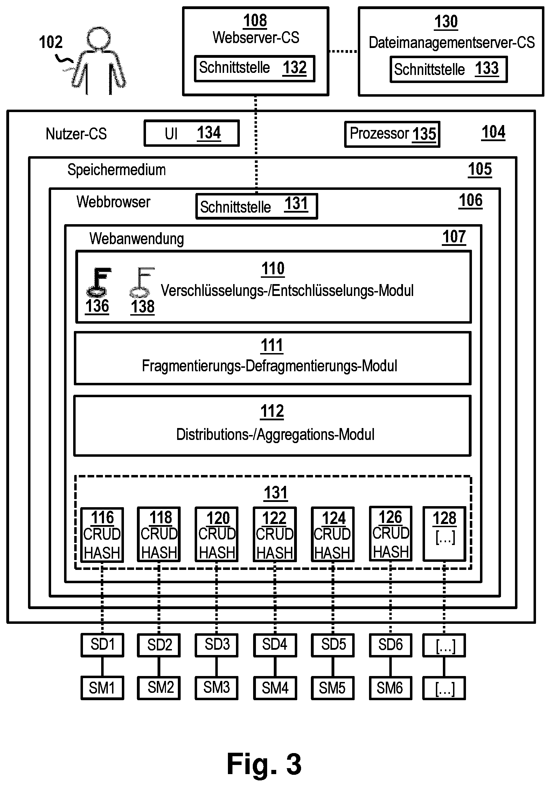

Figur 3 zeigt ein Blockdiagramm des Nutzer-Computersystems 104. Das Nutzer-Computersystem 104 beinhaltet eine Nutzer-Schnittstelle (User Interface) 134. Die Schnittstelle kann zum Beispiel eine graphische Benutzeroberfläche beinhalten, die einen auf dem Nutzer-Computersystems 104 ausgeführten Webbrowser 106 anzeigt. Außerdem kann die Schnittstelle 134 Eingabemittel, zum Beispiel eine Tastatur oder Maus umfassen, die es dem Nutzer erlaubt, die Webanwendung aufzurufen und/oder Dateien zum Hochladen oder Herunterladen unter Verwendung der Webanwendung auswählen. Über die Nutzer-Schnittstelle 134 kann sich der Nutzer ferner gegenüber dem Webserver-Computersystem authentifizieren. Hierzu umfasst die Nutzer-Schnittstelle 134 beispielsweise ein oder mehrere Sensoren zum Erfassen eines oder mehrerer biometrischer Merkmale des Nutzers 102. Das Nutzer-Computersystem 104 beinhaltet einen Prozessor 135 und ein nicht flüchtiges Speichermedium 105 auf welchem der Webbrowser 106 zum Aufrufen und Ausführen von Webanwendungen 107 installiert ist. Die Webanwendungen 107 werden dabei durch den Webbrowser ausgeführt, sind selbst aber nicht auf dem Nutzer-Computersystems 104 installiert. Über eine Schnittstelle 131 kann der Webbrowser 106 mit dem Webserver-Computersystem 108 kommunizieren, insbesondere kann über die Schnittstelle 131 die Webanwendung 107 abgerufen werden. Ferner können Dienste in Anspruch genommen werden. Die Webanwendung 107 kommuniziert über die Schnittstelle 131 beispielsweise mit einer auf dem Webserver-Computersystem 108 installierten Server-Anwendung 354. Zudem wird beispielsweise eine indirekte Kommunikation mit dem Dateimanagementserver-Computersystem 130 über das Webserver-Computersystem 108 mittels der Schnittstellen 132 und 133 ermöglicht. Die Webanwendung 107 kann außerdem Schnittstellen 116-128 vorsehen, die standardisierte Dateioperationen ("CRUD": "CREATE", "READ", "UPDATE", "DELETE") definiert, die von jedem der Speicherdienste interpretiert und durchgeführt werden können. Bei den Schnittstellen 116-128 handelt es sich also letztlich um eine einheitliche Schnittstelle mit einheitlicher Methodensignatur für CRUD Operationen.

Die Webanwendung 108 umfasst Module zum Implementieren der Speicherfunktion. Hierbei handelt es sich beispielsweise um ein Ver-/Entschlüsselungs-Modul 110, das zum Beispiel symmetrische Schlüssel und/oder asymmetrische Schlüssel 136, 138 speichert und/oder erzeugt. Diese Schlüssel dienen zum Verschlüsseln bzw. Entschlüsseln von Dateien, Referenzdaten und/oder Verteilungsplänen. Bei dem symmetrischen Schlüssel kann es sich beispielsweise um einen Hashwert der zu verschlüsselnden Datei 101 handeln, mit welchem die entsprechende Datei vor dem fragmentieren verschlüsselt und später wieder entschlüsselt werden kann. Nachdem der symmetrische Schlüssel zu den Referenzdaten hinzugefügt wurde, wird dieser beispielsweise gelöscht, sodass er nur noch als Bestandteil der Referenzdaten zur Verfügung steht. Ferner werden die unverschlüsselten Referenzdaten nach ihrer Verschlüsselung beispielsweise gelöscht, sodass sie nur noch in verschlüsselter Form vorliegen. Nach Ausführungsformen dient das Modul 110 zudem zum Ver- und Entschlüsseln von Dateifragmenten der verschlüsselten Datei. Ferner verwaltet es den öffentlichen Schlüssel 136. Beispielsweise übermittelt es den öffentlichen Schlüssel 136 über die Schnittstelle 132 an das Webserver-Computersystem 108 und/oder das Dateimanagement-Computersystem 130. Zudem verwendet das Ver-/Entschlüsselungs-Modul 110 den öffentlichen Schlüssel 136 zum Verschlüsseln von Referenzdaten oder zumindest von symmetrischen Schlüsseln der verteilt gespeicherten Dateien. Das Modul 110 erlaubt also die Erzeugung und Verwendung symmetrischer Schlüssel sowie die Verwendung und Verwaltung des öffentlichen und privaten Schlüsseln 136, 138.

Außerdem kann die Webanwendung 107 ein Fragmentierung-/Defragmentierungs-Modul 111 umfassen, dass eine mittels des Moduls 110 mit dem symmetrischen Schlüssel verschlüsselte Datei 101 durch Anwendung eines in einem Verteilungsplan spezifizierten Fehlerkorrekturverfahrens FKV in mehrere Dateifragmente F1-F4 zerlegen und mit Fehlerkorrekturbits anreichern kann. Falls ein oder mehrere der Speicherdienste, auf welchen Dateifragmente der Datei gespeichert sind, ausfallen sollten, kann die Defragmentierungs-Funktion des Moduls 111 aus den verbliebenen Dateifragmenten die ursprüngliche Datei regenerieren, sofern die in den übrigen Dateifragmenten enthaltenen Fehlerkorrekturbits hierfür ausreichen.

Ein weiteres Modul 112, hier als Distributions-/Aggregations-Modul bezeichnet, beinhaltet mehrere Funktionalitäten, die zur verteilten und sicheren Speicherung der von Modul 111 generierten Dateifragmente in den in dem Verteilungsplan spezifizierten Speicherdiensten SD2, SD4-SD6 dienen. Das Modul 112 kann zum Beispiel einen Hashwert der ursprünglichen Datei 101 berechnen. Außerdem kann ein Hashwert jedes der generierten Dateifragmente F1-F4 berechnet werden, die als Identifikatoren der Dateifragmente dienen und die dem ursprünglichen Dateinamen der Datei mittels eines "Mappings" zugeordnet werden. Der symmetrische Schlüssel, die Hashwerte und das Mapping können als Referenzdaten dienen um eine Rekonstruktion der Datei aus den Dateifragmenten zu ermöglichen. Außerdem können die Referenzdaten Identifikatoren und Pfade der Speicherdienste beinhalten, in welchen die Dateifragmente gespeichert wurden. Ferner können die Referenzdaten den Speicherort des Verteilungsplans für die Rekonstruktion der entsprechenden Datei 101 identifizieren. Beispielsweise werden die von einem Nutzer-Computersystem 104 erzeugten Referenzdaten 404 der Datei 101 oder zumindest der symmetrische Schlüssel durch einen öffentlichen Schlüssel 136, der dem Nutzer-Computersystem 104 und damit auch dem Nutzer 102 spezifisch zugeordnet ist, verschlüsselt und in verschlüsselter Form an das Webserver-Computersystem 108 über das Netzwerk 178 übertragen. Falls das Nutzer-Computersystem 104 zu einem späteren Zeitpunkt auf die verteilt gespeicherte Datei 101 zugreifen soll, kann es die Referenzdaten im Zuge eines Ausführens der Webanwendung 107 von dem Webserver-Computersystem 108 empfangen und die verschlüsselten Referenzdaten mit dem symmetrischen Schlüssel mittels des privaten Schlüssels 138 entschlüsseln. Die Aggregations-Funktionalität des Moduls 112 erlaubt z.B. eine Rekonstruktion der ursprünglichen Datei 101 aus den Dateifragmenten F1-F4 unter Zuhilfenahme der Referenzdaten 440 und des Verteilungsplans 416. Die rekonstruierte Datei kann mittels des Moduls 110 und des symmetrischen Schlüssels entschlüsselt werden.

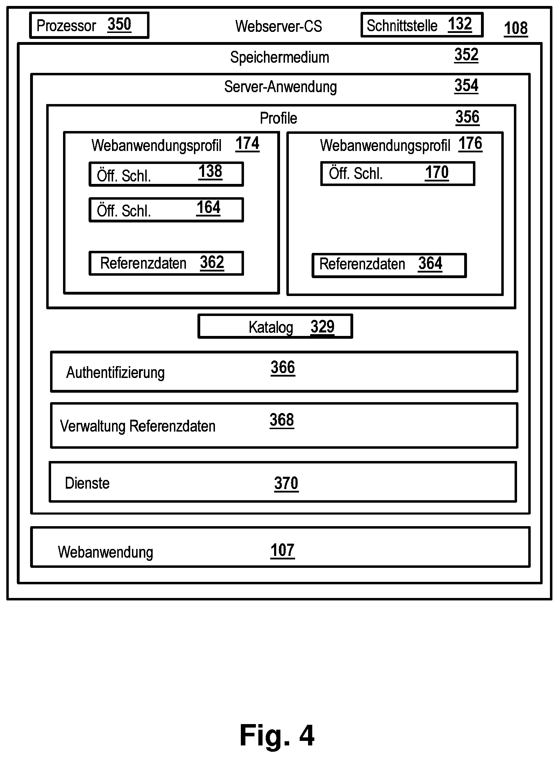

Figur 4 zeigt ein Blockdiagramm des Webserver-Computersystems 108. Das Webserver-Computersystems 108 umfasst einen Prozessor 350 und ein nichtflüchtiges Speichermedium 352, auf welchem eine Server-Anwendung 354 installiert ist.

Diese kann zur Verwaltung mehrerer Profile 356 von Webanwendungen 107 bzw. der registrierten Nutzer von Webanwendungen 107, zum Beispiel Webanwendungsprofil 174 von Nutzer 102 oder Webanwendungsprofil I 176 von Nutzer 160 dienen. Die Webanwendungsprofil 174, 176 umfassen beispielsweise öffentliche Schlüssel 136, 164, 170, welche den entsprechenden Nutzern 102, 160 zugeordnet sind. Ferner können die die Profile 356 ein oder mehrere Referenzdatenlisten 362, 364 umfassen, in welchen für spezifische oder alle Nutzer der Webanwendung 107 Referenzdaten der über die Webanwendung auf den Speicherdiensten verteilt gespeicherten Dateien hinterlegt sind. Beispielsweise sind die Referenzdaten 362, 364 in kryptographisch gesicherter Form, etwa verschlüsselt und/oder mit begrenztem Zugriff, auf dem Webserver-Computersystem 108 gespeichert.

Ferner umfasst das Webserver-Computersystems 108 beispielsweise einen Katalog aller für die verteilte Speicherung geeigneten bzw. zur Verfügung stehenden Speicherdienste.

Das Webserver-Computersystems 108 stellt unter Verwendung der Schnittstelle 132 die Webanwendung 107 zum Abruf über das Netzwerk 178 bereit.

Das Modul 366 der Server-Anwendung 354 ist zum Beispiel für die zentrale Verwaltung der Zugriffsrechte und für die dateibezogene Prüfung auf Zugriffsberechtigung durch andere Nutzer verantwortlich. Ein Nutzer kann sich im Zuge eines Ausführens der Webanwendung 107 gegenüber der Server-Anwendung 354 dadurch als berechtigt ausweisen, dass er seine Identität, die sich aus unterschiedlichen Attributen zusammensetzen kann (Name, E-Mail-Adresse, Bankkonto, Wohnadresse, Geburtsdatum, Nationalität etc.) gegenüber der Server-Anwendung 354 in vertrauenswürdiger Weise nachweist. Die Echtheit dieser Attribute kann mit unterschiedlichem Aufwand bestätigt werden (z.B. ein Bankkonto durch eine Überweisung mit einem übermittelten Geheimnis im Feld "Verwendungszweck", Email durch die Übersendung einer Mail mit einem Bestätigungslink, Wohnort bzw. Geburtsdaten, oder durch sicheres Auslesen der Daten aus einem elektronischen Personalausweis).

Das Modul 368 verwaltet Referenzdaten einer Mehrzahl von Dateien, welche im Zuge der Ausführung der Webanwendung 107 verwendet und/oder erzeugt wurden, einer Mehrzahl von Nutzern, die sich bei der Server-Anwendung 354 registriert haben. Das Modul 338 kann anhand der Referenzdaten den Nutzern 102, 160 bei Verwendung der Webanwendung 107 einen Zugriff auf die verteilt gespeicherten Dateien ermöglichen. Insgesamt kann somit gemäß Ausführungsformen eine flexible Lösung zur sicheren und hochverfügbaren Datenauslagerung unter Verwendung mehrerer externer Speicherdienste bereitgestellt werden. Nutzer können, sofern sie die entsprechenden Berechtigungen haben, unter Verwendung der Webanwendung 107 auf verteilt gespeicherte Dateien zugreifen. Hierzu müssen sie keine spezifischen Client-Anwendungen 108 installiert haben.

Das Modul 370 stellt einen oder mehrere Dienste bereit, welche von den Nutzern über die Webanwendung gemäß einem Client-Server-Modell in Anspruch genommen werden können.

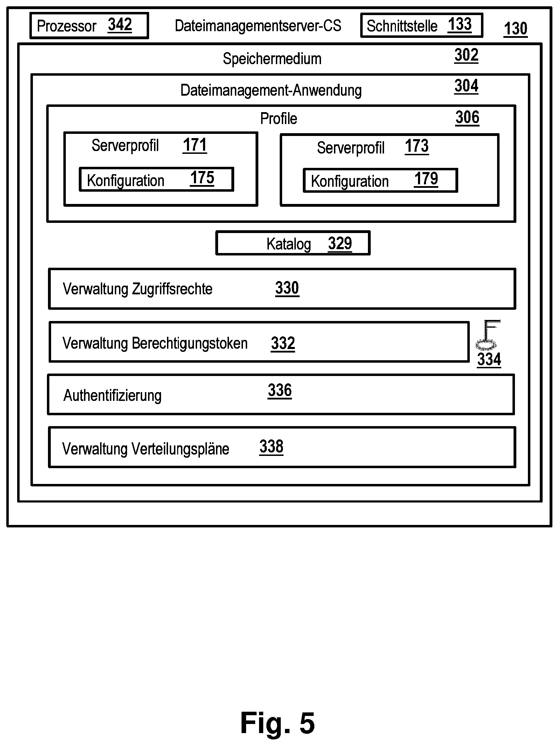

Figur 5 zeigt ein Blockdiagramm des Dateimanagementserver-Computersystems 130. Das Dateimanagementserver-Computersystem 130 umfasst einen Prozessor 342 und ein nichtflüchtiges Speichermedium 302, auf welchem eine Dateimanagement-Anwendung 304 installiert ist. Diese kann beispielsweise zur Verwaltung mehrerer Serverprofile 306 dienen, zum Beispiel Serverprofil 171 von Webserver-Computersystem 108 sowie weiteren Serverprofilen 173 weiterer Webserver-Computersystem, welche Webanwendung mit integrierter Dateispeicherung über das Netzwerk 178 bereitstellen. Die Webserver-Computersystem können den jeweiligen Profilen Konfigurationen 175, 179 festlegen, welche gemäß dem Katalog 329 zur Verfügung stehenden der Speicherdiensten SD1-SD6 für eine Speicherung von Dateien verwendet werden sollen bzw. welche Anforderungen deren IT-Infrastrukturen jeweils erfüllen müssen, damit sie verwendet werden.

Die Dateimanagement-Anwendung 304 kann also als zentrale Instanz die Serverprofile mehrerer Webserver-Computersysteme verwalten und auch die Vorgaben der Webserver-Computersysteme bezüglich der Speicherdiensten SD1-SD6 kontrollieren und umsetzen.

Das Modul 330 der Dateimanagement-Anwendung 304 ist zum Beispiel für die zentrale Verwaltung der Zugriffsrechte und für die dateibezogene Prüfung auf Zugriffsberechtigung verantwortlich. Ein Webserver-Computersystem 108 kann sich gegenüber der Dateimanagement-Anwendung 304 unter Verwendung des Authentifizierungsmoduls 336 authentifizieren.

Das Modul 332 dient dazu, nachdem ein Webserver-Computersystem 108 seine Berechtigung zum Bereitstellen eines Zugriffs auf eine Datei gegenüber der Dateimanagement-Anwendung 304 nachgewiesen hat, Berechtigungstoken von den in dem Verteilungsplan spezifizierten Speicherdiensten anzufordern. Die Berechtigungstoken werden mit einem Signierungsschlüssel 334 der Dateimanagement-Anwendung 304 signiert und in signierter Form an das Webserver-Computersystem 108, von welchem eine entsprechende Berechtigung-Anfrage zum Dateizugriff empfangen wurde, gesendet. Das Webserver-Computersystem 108 leitet die entsprechenden Berechtigungstoken dann beispielsweise über eine Webanwendung an ein Nutzer-Computersystem weiter.

Das Modul 338 verwaltet Verteilungspläne einer Mehrzahl von Dateien, die beispielsweise von Webserver-Computersystemen oder Nutzer-Computersystemen generiert wurden. Anhand der Verteilungspläne kann identifiziert werden, wo die Dateifragmente gespeichert sind und wie diese zu defragmentieren sind. Alternativ kann das Modul 338 selbst eine dynamische Erstellung und Weiterleitung von Verteilungsplänen zur verteilten Speicherung einer Datei 101 ermöglichen, wobei in dem Verteilungsplan ein Fehlerkorrekturverfahren FKV spezifiziert ist sowie mehrere Speicherdienste SD1-SD6.

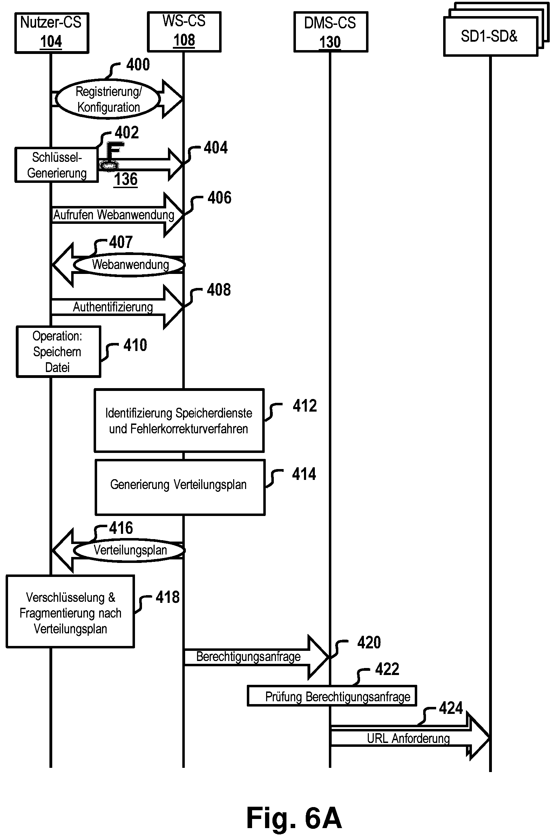

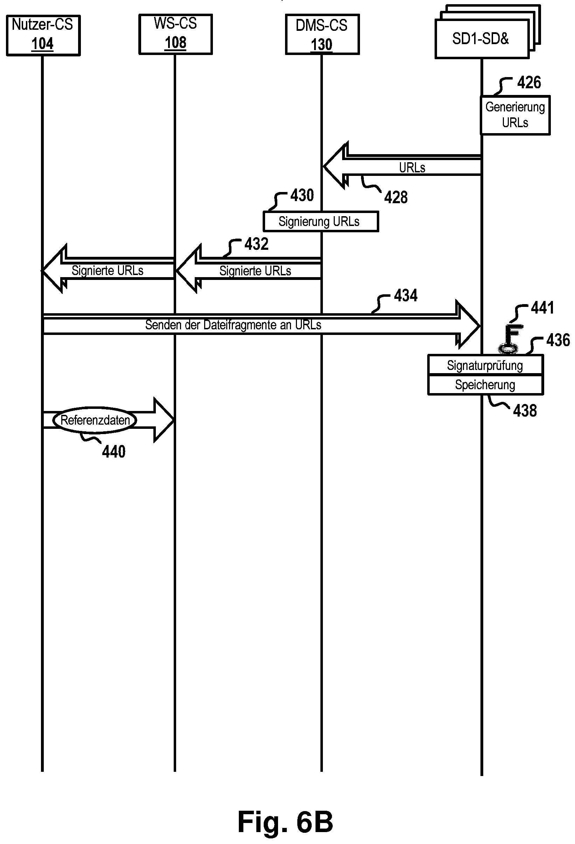

Figuren 6A und 6B zeigen den Ablauf des verteilten Speicherns einer Datei gemäß einer Ausführungsform. In Schritt 400 erfolgt eine Registrierung des Nutzers bei dem Webserver-Computersystem 108 bzw. einem von dem Webserver-Computersystem 108 bereitgestellten Dienst. In Schritt 402 wird ein öffentlicher Verschlüsselungsschlüssel 136 generiert und in Schritt 404 über die Schnittstelle 131 an das Webserver-Computersystem 108 übertragen. Die Übertragung des öffentlichen Schlüssels 136 kann beispielsweise im Zuge der Registrierung 400 des Nutzers bei dem Webserver-Computersystem 108 oder danach erfolgen. Das Nutzer-Computersystem 104 umfasst beispielweise den öffentlichen kryptographischen Schlüssel 136, d.h. den öffentlichen Verschlüsselungsschlüssel. Der zugehörige privaten Schlüssel 138, d.h. der private Entschlüsselungsschlüssel, ist in einem geschützten Speicherbereich des Nutzer-Computersystems 104 oder einem zusätzlichen Hardwaretoken gespeichert.

In Schritt 406 wird die von dem Webserver-Computersystem 108 bereitgestellte Webanwendung über einen Webbrowser des Nutzer-Computersystems 104 aufgerufen. In Schritt 407 empfängt das Nutzer-Computersystem 104 in Antwort auf die Anfrage aus Schritt 406 Programminstruktionen zum Ausführen der Webanwendung in dem Webbrowser auf dem Nutzer-Computersystem 104. In Schritt 408 authentifiziert sich der Nutzer des Nutzer-Computersystems 104 gegenüber dem Webserver-Computersystem 108 unter Verwendung der Webanwendung.

Um eine bestimmte Datei verteilt zu speichern, ist eine dezentrale Speicheroperation zum Zugreifen auf bzw. Einbinden von mehrere Speicherdienste erforderlich. In Schritt 410 wird eine solche Speicheroperation zum verteilten Speichern einer Datei auf mehrere Speicherdienste durch den Nutzer bzw. das Nutzer-Computersystem initiiert. In Schritt 410 wird beispielsweise ein symmetrischer Schlüssel zum Verschlüsseln der verteilt zu speichernden Datei generiert. In Schritt 418 wird die Datei mit dem generierten Schlüssel verschlüsselt. Die Verschlüsselung erfolgt zum Beispiel mit einem Hashwert der Datei 101, welcher als symmetrischer kryptographischer Schlüssel dient.

Zum Speichern auf den Speicherdiensten erfolgt jedoch keine direkte Authentifizierung bei den einzelnen Speicherdiensten oder dem Dateimanagementserver-Computersystem durch das Nutzer-Computersystem 104. Vielmehr authentifiziert sich das Nutzer-Computersystem 104 lediglich in Schritt 408 gegenüber dem Webserver-Computersystem 108. Nach Ausführungsformen kann die Authentifizierung auch im Zuge des Aufrufens der Webanwendung erfolgen.

Das Webserver-Computersystem 108 identifiziert in Schritt 412 automatisch die Identität und Anzahl derjenigen Speicherdienste, die zur Speicherung von Dateifragmenten der zu speichernden Datei 101 verwendet werden sollen. Außerdem identifiziert das Webserver-Computersystem 108 ein Fehlerkorrekturverfahren zum Fragmentieren der zu speichernden Datei. Ferner wird geprüft, dass das Fehlerkorrekturverfahren die Datei so auf Dateifragmente verteilt, dass Anforderungen im Hinblick auf die Verfügbarkeit der Datei gewährleistet sind. Generell gilt, dass je höher der Anteil der Fehlerkorrekturbits pro Dateifragment, desto größer die über das Netzwerk zu übertragende Datenmenge und desto größer die Redundanz der übertragenen Daten, desto höher aber auch die Verfügbarkeit der Datei trotz eines eventuellen Ausfalls einer oder mehrerer der Speicherdienste.

Das Webserver-Computersystem 108 generiert in Schritt 414 einen Verteilungsplan, der Identifikatoren der ermittelten Speicherdienste sowie Instruktionen zur Durchführung des ermittelten Fehlerkorrekturverfahrens (zum Beispiel Konfigurationsdaten des Fehlerkorrekturverfahrens) beinhaltet. Der Verteilungsplan wird in Schritt 416 an das Nutzer-Computersystem 104 über das Netzwerk übertragen. Alternativ dazu kann in manchen Ausführungsformen der Verteilungsplan auch durch das Nutzer-Computersystem 104 erstellt werden. Das Nutzer-Computersystem 104 verschlüsselt in Schritt 418 die Datei 101 und generiert mittels des in dem Verteilungsplan spezifizierten Fehlerkorrekturverfahrens in Schritt 418 mehrere Dateifragmente F1-F4 der verschlüsselten Datei. Nach Ausführungsformen können die einzelnen Dateifragmente jeweils nochmals zusätzlich mit demselben oder einem weiteren symmetrischen Schlüssel verschlüsselt werden.

Um die generierten Dateifragmente speichern zu können, sendet das Webserver-Computersystem 108 eine Berechtigungsanfrage in Schritt 420 an das Dateimanagementserver-Computersystem 130, wobei diese Berechtigungsanfrage eine Anfrage beinhaltet, ob das Webserver-Computersystem 108 berechtigt ist, auf die in dem Verteilungsplan spezifizierten Speicherdienste bzw. deren Speichermedien schreibend zuzugreifen, um die Dateifragmente dort zu speichern. In Antwort auf den Erhalt der Berechtigungsanfrage prüft das Dateimanagementserver-Computersystem 130 in Schritt 422, ob das Webserver-Computersystem 108 für die angefragte Schreiboperation berechtigt ist. Falls dies der Fall ist und sich das Webserver-Computersystem 108 außerdem gegenüber dem Dateimanagementserver-Computersystem 130 erfolgreich authentifiziert hat, fordert das Dateimanagementserver-Computersystem 130 in Schritt 424 von den in dem Verteilungsplan und in der Berechtigungsanfrage spezifizierten Speicherdiensten SD1-SD& Berechtigungstoken über das Netzwerk an. Die Berechtigungstoken können zum Beispiel als URLs 428 ausgebildet sein. In Antwort auf den Erhalt der Anforderung generieren die einzelnen Speicherdienste SD1-SD& in Schritt 426 URLs zum Zugriff auf einen Speicherbereich von Speichermedien der jeweiligen Speicherdienste und senden die URLs in Schritt 428 an das Dateimanagementserver-Computersystem 130. Das Dateimanagementserver-Computersystem 130 signiert in Schritt 430 die empfangenen URLs und leitet diese in signierter Form 432, beispielsweise über das Webserver-Computersystem 108, an das Nutzer-Computersystem 104 weiter.

Das Nutzer-Computersystem verwendet die signierten URLs um mittels dieser direkt auf die in den URLs angegebenen Speicherbereiche der Speicher der einzelnen Speicherdienste schreibend zuzugreifen und die Dateifragmente F1-F4 unter Umgehung des Dateimanagementserver-Computersystems 130 in Schritt 434 direkt in den Speichermedien der besagten Speicherdienste SD1-SD& über das Netzwerk zu speichern. Allerdings führen die einzelnen Speicherdienste in Schritt 436 eine Signaturprüfung der signierten URLs mittels eines Signaturprüfschlüssels, der mit dem Signierschlüssel 334 des Dateimanagementserver-Computersystems 130 ein asymmetrisches kryptographisches Schlüsselpaar bildet, durch. Eine Speicherung in Schritt 438 von Dateifragmenten erfolgt beispielsweise jeweils nur, falls die Prüfung ergibt, dass die Signatur der URL valide ist.

In Schritt 440 wird der zur Verschlüsselung der Datei verwendete symmetrische kryptographische Schlüssel Referenzdaten für die verteilt gespeicherte Datei 101 hinzugefügt und zur Speicherung an das Webserver-Computersystem 108 gesendet. Die Referenzdaten können ferner Informationen über den Nutzer, die Datei, die zur kryptographischen Sicherung verwendete Schlüssel und/oder den Speicherort des Verteilungsplans umfassen. Die Referenzdaten werden von dem Webserver-Computersystem 108 beispielsweise verschlüsselt gespeichert. Ebenso wird der von den Referenzdaten identifizierte Verteilungsplan beispielsweise von dem Dateimanagement-Computersystem 130 in verschlüsselter Form gespeichert.

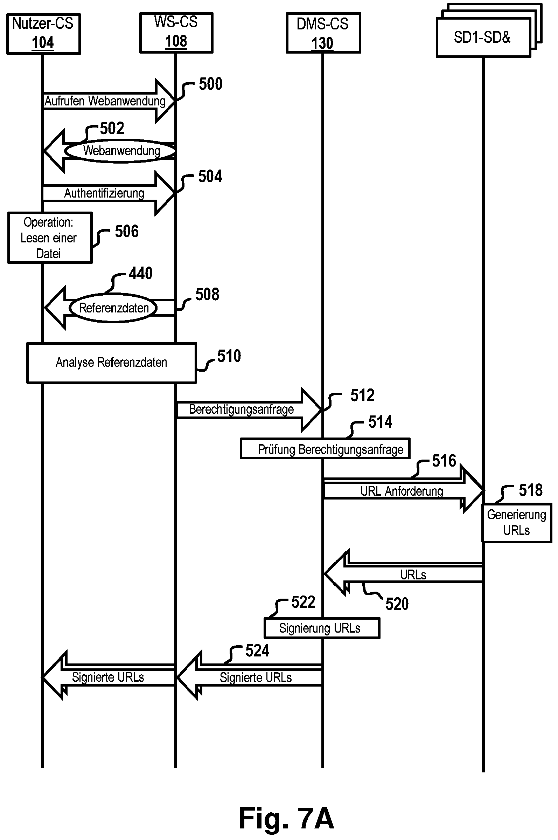

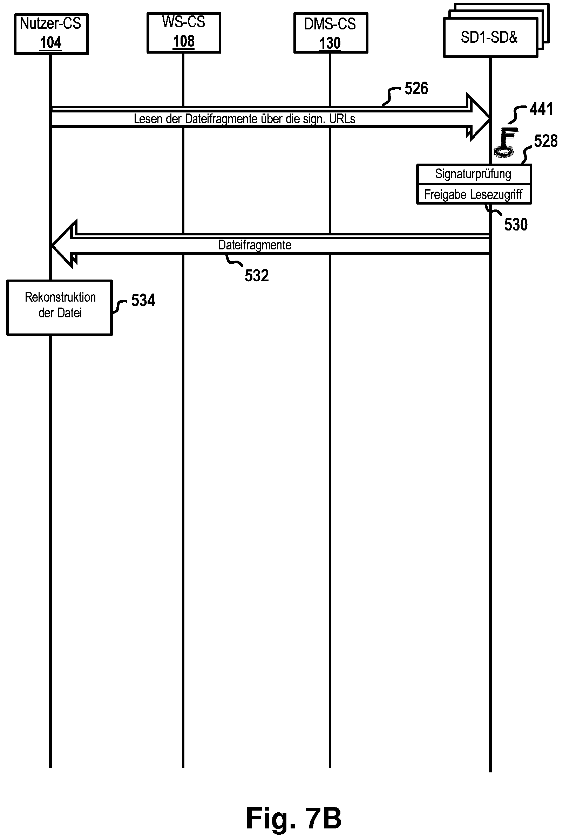

Die Figuren 7A und 7B zeigen ein Ablaufdiagramm eines Lesezugriffs eines Nutzer-Computersystems 104 eines weiteren Nutzers 160 auf die verteilt gespeicherte Datei 101. In Schritt 500 wird die von dem Webserver-Computersystem 108 bereitgestellte Webanwendung über einen Webbrowser des Nutzer-Computersystems 104 aufgerufen bzw. angefragt. In Schritt 502 empfängt das Nutzer-Computersystem 104 in Antwort auf die Anfrage aus Schritt 500 Programminstruktionen zum Ausführen der Webanwendung in dem Webbrowser auf dem Nutzer-Computersystem 104. In Schritt 504 authentifiziert sich der Nutzer des Nutzer-Computersystems 104 gegenüber dem Webserver-Computersystem 108 unter Verwendung der Webanwendung.

Im Zuge des Ausführens der Webanwendung ergibt sich die Notwendigkeit auf eine verteilt gespeicherte Datei 101 zuzugreifen. Dieser Vorgang, d.h. das Initiieren eines Lesezugriffs wird, ist als Leseoperation 506 dargestellt. Um auf die Datei 101 lesend zugreifen zu können, empfängt das Nutzer-Computersystem 104 in Schritt 508 Referenzdaten 440 von dem Webserver-Computersystem 108, welche der zu lesenden Datei 101 zugordnet sind. Ferner analysiert das Nutzer-Computersystem 104 und/oder das Webserver-Computersystem 108 in Schritt 510 die Referenzdaten 440. Gegebenenfalls stellt das Nutzer-Computersystem 104 dem Webserver-Computersystem 108 zu diesem Zweck zumindest einen Teil der entschlüsselten Referenzdaten 440 zu Verfügung.

In Schritt 512 sendet das Webserver-Computersystem 108 eine Berechtigungsanfrage an das Dateimanagementserver-Computersystem 130, wobei diese Berechtigungsanfrage eine Anfrage beinhaltet, ob das Webserver-Computersystem 108 berechtigt ist, auf die in dem Verteilungsplan spezifizierten Speicherdienste bzw. deren Speichermedien lesend zuzugreifen, um die Dateifragmente von dort herunterzuladen. In Antwort auf den Erhalt der Berechtigungsanfrage prüft das Dateimanagementserver-Computersystem 130 in Schritt 514, ob das Webserver-Computersystem 108 für die angefragte Schreiboperation berechtigt ist. Falls dies der Fall ist und sich das Webserver-Computersystem 108 außerdem gegenüber dem Dateimanagementserver-Computersystem 130 erfolgreich authentifiziert hat, fordert das Dateimanagementserver-Computersystem 130 in Schritt 516 von den in dem Verteilungsplan und in der Berechtigungsanfrage spezifizierten Speicherdiensten SD1-SD& Berechtigungstoken über das Netzwerk an. Die Berechtigungstoken können zum Beispiel als URLs 520 ausgebildet sein. In Antwort auf den Erhalt der Anforderung generieren die einzelnen Speicherdienste SD1-SD& in Schritt 426 URLs zum Zugriff auf einen Speicherbereich von Speichermedien der jeweiligen Speicherdienste und senden die URLs in Schritt 520 an das Dateimanagementserver-Computersystem 130. Das Dateimanagementserver-Computersystem 130 signiert in Schritt 522 die empfangenen URLs und leitet diese in Schritt 524 in signierter Form, beispielsweise über das Webserver-Computersystem 108, an das Nutzer-Computersystem 104 weiter.

Die signierten Berechtigungstoken 524 ermöglichen es dem Nutzer-Computersystem 104, einen direkten Lesezugriff 526 auf die Speichermedien der jeweiligen Speicherdienste mittels der signierten URLs durchzuführen. Der Lesezugriff wird von den jeweiligen Speicherdiensten beispielsweise nur gestattet, falls eine Signaturprüfung mittels des Signaturprüfschlüssels 441 in Schritt 528 durch die jeweiligen Speicherdienste ergibt, dass die Signatur der Berechtigungstoken valide ist. In diesem Fall geben die Speicherdienste in Schritt 530 eine Erlaubnis zum Lesen der jeweiligen gespeicherten Dateifragmente. Die Dateifragmente werden in Schritt 532 über das Netzwerk direkt an das Nutzer-Computersystem 104 übertragen.

In Schritt 534 werden die empfangenen Dateifragmente von der in dem Webbrowser ausgeführten Webanwendung auf dem Nutzer-Computersystem 104 zu der ursprünglichen verschlüsselten Datei 101 assembliert. Falls die einzelnen Dateifragmente 530 jeweils zusätzlich verschlüsselt sind, werden diese vor dem Assemblieren bzw. Rekonstruieren unter Zuhilfenahme entsprechender Schlüssel, welche beispielsweise die Referenzdaten identifizieren, entschlüsselt. Ferner wird die rekonstruierte Datei 101 schließlich mittels des entsprechenden symmetrischen Schlüssels durch das Nutzer-Computersystem 104 entschlüsselt.

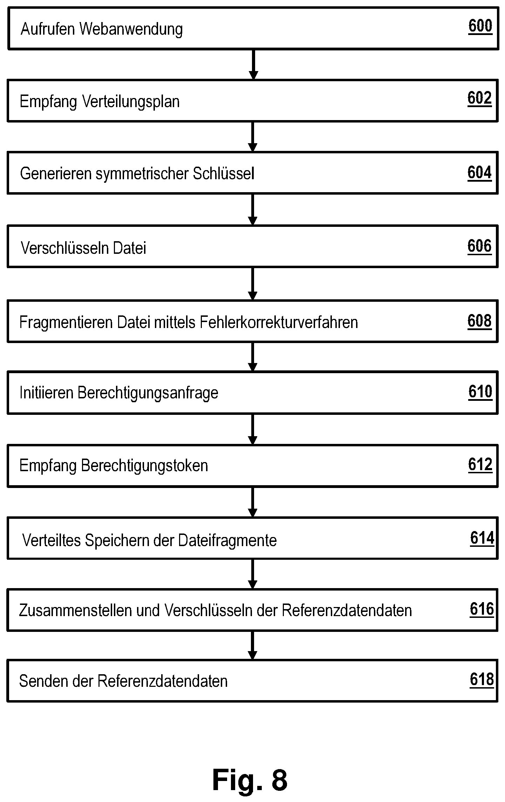

Figur 8 zeigt ein Verfahren zur Speicherung einer Datei 101 mittels mehrerer Speicherdienste über ein Netzwerk unter Verwendung einer in einem Webbrowser ausgeführten Webanwendung. In Schritt 600 wird die entsprechende Webanwendung mittels des Webbrowsers über ein Netzwerk, wie etwa das Internet, von einem Webserver-Computersystem 108 aufgerufen und in dem Webbrowser auf dem Nutzer-Computersystem 104 ausgeführt. In einem ersten Schritt 602 wird ein Verteilungsplan für das Fragmentieren und verteilte Speichern der Datei 101 durch die Webanwendung empfangen. In Schritt 604 generiert die Webanwendung einen symmetrischen Schlüssel 139 zum Verschlüsseln der zu speichernden Datei 101. In Schritt 606 wird die Datei 101 mit dem symmetrischen Schlüssel 139 verschlüsselt. In Schritt 608 führt die Webanwendung auf dem Nutzer-Computersystem 104 ein Fehlerkorrekturverfahren durch, das in dem Verteilungsplan spezifiziert ist, und generiert Dateifragmente, welche gemäß dem Verteilungsplan in mehreren Speicherdiensten gespeichert werden sollen. Hierfür initiiert die Webanwendung in Schritt 610 eine Berechtigungsanfrage durch Webserver-Computersystem 108 an ein Dateimanagement-Computersystem 130 bezüglich des Speicherns der Datei 101 mittels der in dem Verteilungsplan 416 spezifizierten Speicherdienste. In Antwort auf den Erhalt der Berechtigungsanfrage fordert das Dateimanagement-Computersystem 130 ein Berechtigungstoken von jedem der Speicherdienste, in welchem ein Dateifragment gespeichert werden soll, an. In Schritt 612 leitet das Dateimanagement-Computersystem die Berechtigungstoken über das Webserver-Computersystem 108 an das Nutzer-Computersystem 104 weiter. Nach manchen Ausführungsformen werden die Berechtigungstoken von der Dateimanagement-Computersystem 130 vor der Weiterleitung zusätzlich signiert. Das Nutzer-Computersystem 104 weist in Schritt 614 seine Berechtigung zum Schreiben der Dateifragmente in den einzelnen Speicherdiensten mit Hilfe der Berechtigungstoken nach und speichert nach erfolgreichem Nachweis der Berechtigung die generierten Dateifragmente in den Speichermedien der entsprechenden Speicherdienste unter Umgehung des Webserver-Computersystem 108 sowie des Dateimanagementserver-Computersystems 130. In Schritt 616 erstellt das Nutzer-Computersystem 104 Referenzdaten der verteilt gespeicherten Datei und verschlüsselt diese mit einem öffentlichen Schlüssel 136, welcher mit einem in einem geschützten Speicherbereich eines Hardwaretokens gespeicherten privaten Schlüssel 138 ein asymmetrisches kryptographisches Schlüsselpaar bildet. Die Referenzdaten werden in Schritt 618 von dem Nutzer-Computersystem 104 zum Speichern über die Webanwendung an das Webserver-Computersystem 108 gesendet.

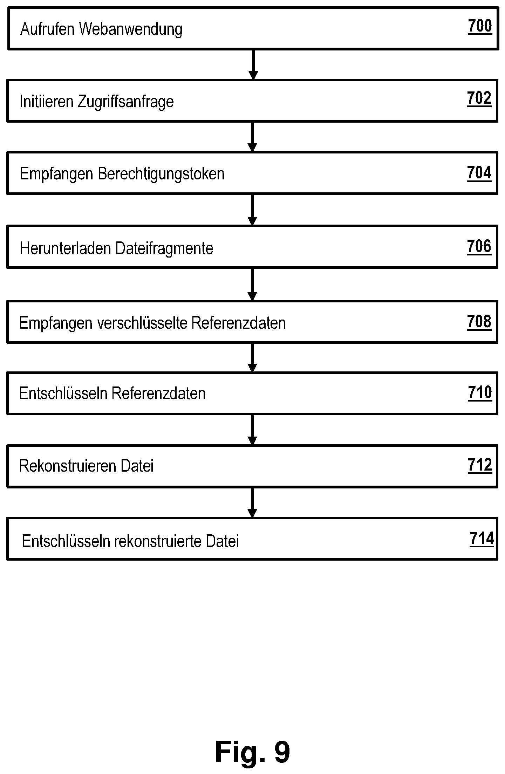

Figur 9 zeigt ein Verfahren zum Rekonstruieren einer auf mehreren Speicherdiensten über ein Netzwerk verteilt gespeicherten Datei 101 unter Verwendung einer in einem Webbrowser ausgeführten Webanwendung. In Schritt 700 wird die entsprechende Webanwendung mittels des Webbrowsers über ein Netzwerk, wie etwa das Internet, von einem Webserver-Computersystem 108 aufgerufen und in dem Webbrowser auf dem Nutzer-Computersystem 104 ausgeführt. In Schritt 702 initiiert die Webanwendung eine Berechtigungsanfrage durch das Webserver-Computersystem 108 bezüglich des Zugriffs auf die mittels der in dem Verteilungsplan 416 spezifizierten Speicherdienste verteilt gespeicherten Datei 101 an das Dateimanagementserver-Computersystems 130. In Antwort auf den Erhalt der Berechtigungsanfrage fordert das Dateimanagementserver-Computersystems 130 ein Berechtigungstoken von jedem der Speicherdienste, in welchem ein Dateifragment gespeichert ist, an. In Schritt 704 leitet das Dateimanagementserver-Computersystems 130 die über das Webserver-Computersystem 108 an die Webanwendung weiter. Nach manchen Ausführungsformen werden die Berechtigungstoken von dem Dateimanagementserver-Computersystems 130 vor der Weiterleitung zusätzlich signiert. Das Nutzer-Computersystem 104 bzw. die Webabwendung weisen in Schritt 706 ihre Berechtigung zum Herunterladen der Dateifragmente den einzelnen Speicherdiensten mit Hilfe der Berechtigungstoken nach und empfangen nach erfolgreichem Nachweis der entsprechenden Berechtigung die gespeicherten Dateifragmente von den Speichermedien der einzelnen Speicherdienste unter Umgehung des Webserver-Computersystem 108 sowie des Dateimanagementserver-Computersystems 130. Nach Ausführungsformen empfängt die Webanwendung in Schritt 708 von dem Webserver-Computersystem 108 zusätzlich verschlüsselte Referenzdaten zum Rekonstruieren der verteilt gespeicherten Datei 101, wobei im Falle der verschlüsselten Referenzdaten beispielsweise zumindest der von diesen umfasste symmetrische Schlüssel durch ein asymmetrisches Verschlüsselungsverfahren verschlüsselt ist. In Schritt 710 entschlüsselt die Webanwendung die Referenzdaten. In Schritt 712 führt die Webanwendung auf dem Nutzer-Computersystem 104 ein Fehlerkorrekturverfahren durch, das in dem Verteilungsplan spezifiziert ist, und rekonstruiert aus den Dateifragmenten die verschlüsselte Datei 101. In Schritt 714 wird die verschlüsselte Datei 101 mit dem entsprechenden symmetrischen Schlüssel entschlüsselt.

### Bezugszeichenliste

- F1-F4: Dateifragmente
- FKV: Fehlerkorrekturverfahren
- SD1-SD6: Speicherdienste
- SM1-SM6: Speichermedien
- 180-192: IT-Infrastruktur der Speicherdienste
- 101: Datei
- 102: Nutzer
- 104: Nutzer-Computersystem
- 105: Speichermedium
- 106: Webbrowser
- 107: Webanwendung
- 108: Webserver-Computersystem
- 109: Authentifizierungsdaten
- 110: Ver-/Entschlüsselungs-Modul
- 111: (De-) Fragmentierungs-Modul
- 112: Distributions-/Aggregations-Modul
- 113: Dienst-Modul
- 114: Upload-Modul
- 115: Download-Modul
- 116-128: standardisierte Schnittstellen
- 130: Dateimanagementserver-Computersystem
- 131: Schnittstelle
- 132: Schnittstelle
- 133: Schnittstelle
- 134: Nutzer-Schnittstelle
- 135: Prozessor
- 136: öffentlicher Schlüssel
- 138: privater Schlüssel
- 160: Nutzer
- 162: Nutzer-Computersystem
- 164: öffentlicher Schlüssel
- 166: privater Schlüssel
- 168: Nutzer-Computersystem
- 170: öffentlicher Schlüssel
- 171: Serverprofil
- 172: privater Schlüssel
- 173: Serverprofil
- 174: Nutzerprofil
- 175: Konfiguration
- 176: Nutzerprofil
- 177: Verteilungspläne
- 178: Netzwerk
- 179: Konfiguration
- 302: Speichermedium
- 304: Dateimanagement-Anwendung
- 306: Verzeichnis mehrerer Nutzerprofile
- 329: Speicherdienst-Katalog
- 330: Modul zum Berechtigungsmanagement
- 332: Modul zur Verwaltung von Berechtigungstoken
- 334: Signierungsschlüssel
- 336: Modul zur Authentifizierung von Nutzern
- 338: Modul zur Verwaltung von Verteilungsplänen
- 342: Prozessor
- 350: Prozessor
- 352: Speichermedium
- 354: Sever-Anwendung
- 356: Verzeichnis mehrerer Nutzerprofile
- 362: Referenzdatenliste
- 364: Referenzdatenliste
- 366: Modul zur Authentifizierung von Nutzern
- 368: Modul zur Verwaltung von Referenzdaten
- 370: Modul zum Bereitstellen von Diensten
- 400-406: Schritte
- 407: Webanwendung
- 408-414: Schritte
- 416: Verteilungsplan
- 418: Berechtigungsanfrage
- 422: Schritt
- 424: URL-Anforderung
- 426: Schritt
- 428: Berechtigungstoken
- 430: Schritt
- 432: signierten Berechtigungstoken
- 434: übermittelte Dateifragmente
- 436-438: Schritte
- 440: Referenzdaten
- 441: Signaturprüfschlüssel
- 500-510: Schritte
- 512: Berechtigungsanfrage
- 514: Schritt
- 520: Berechtigungstoken
- 522: Schritte
- 524: signierten Berechtigungstoken
- 524: Lesezugriff
- 526-530: Schritte
- 532: übertragene Dateifragmente
- 534: Schritt
- 600-618: Schritte
- 700-714: Schritte

## Patentansprüche

1. Verfahren zum kryptographisch gesicherten Speichern einer Datei (101) unter Verwendung einer Webanwendung (107), welche von einem Webbrowser (106) auf einem Nutzer-Computersystem (104, 162, 168) eines Nutzers (102, 160) ausgeführt wird, wobei das Verfahren umfasst:
• Aufrufen der Webanwendung (107) von einem Webserver-Computersystem (108) über ein Netzwerk (178) durch den Webbrowser (106) auf dem Nutzer-Computersystem (104, 162, 168),
• Verschlüsseln der Datei (101) mit einem kryptographischen Schlüssel lokal auf dem Nutzer-Computersystem (104, 162, 168) durch die Webanwendung (107),
• Bereitstellen eines Verteilungsplans (177, 416) durch die Webanwendung (107), wobei der Verteilungsplan (177, 416) Instruktionen zum Fragmentieren der Datei (101) in eine Mehrzahl von Dateifragmenten (F1-F4) mittels eines Fehlerkorrekturverfahrens (FKV) und Identifikatoren einer Mehrzahl voneinander unabhängiger Speicherdienste (SD1-SD6) umfasst, in deren nichtflüchtigen Speichermedien (SM1-SM6) die erzeugten Dateifragmente (F1-F4) gespeichert werden sollen, **dadurch gekennzeichnet, dass**
• das Fragmentieren der verschlüsselten Datei (101) auf dem Nutzer-Computersystem (104, 162, 168) durch die Webanwendung (107) in eine Mehrzahl von Dateifragmente (F1-F4) mittels des Fehlerkorrekturverfahren (FKV) gemäß dem Verteilungsplan (177, 416) erfolgt, wobei zumindest eines der Dateifragmente (F1-F4) Fehlerkorrekturbits beinhaltet,
• ein Senden der resultierenden Dateifragmente (F1-F4) durch die Webanwendung (107) über das Netzwerk (178) an die von dem Verteilungsplan (177, 416) identifizierten Speicherdienste (SD1-SD6) erfolgt, wobei von dem Webserver-Computersystem (108) für jeden der Speicherdienste (SD1-SD6) jeweils ein Berechtigungstoken als Berechtigungsnachweis zum Speichern des entsprechenden Dateifragments (F1-F4) bereitgestellt wird.

2. Verfahren nach Anspruch 1, wobei das Webserver-Computersystem (108) über die Webanwendung (107) einen Dienst bereitstellt, wobei die zu speichernde Datei (101) Daten umfasst, welche im Zuge eines Ausführens des Dienstes erzeugt und/oder verwendet werden, und/oder
wobei das Bereitstellen des Verteilungsplans (177, 416) ein Erzeugen des Verteilungsplans (177, 416) auf dem Nutzer-Computersystem (104, 162, 168) durch die Webanwendung (107) oder ein Empfangen des Verteilungsplans (177, 416) auf dem Nutzer-Computersystem (104, 162, 168) durch die Webanwendung (107) umfasst, und/oder
wobei das Verfahren ferner ein Senden des Verteilungsplans (177, 416) von der Webanwendung (107) über das Netzwerk (178) an ein Dateimanagementserver-Computersystem (130) zur Speicherung umfasst, und/oder
wobei das Verfahren ferner ein Verschlüsseln des Verteilungsplans (177, 416) umfasst.

3. Verfahren nach einem der vorangehenden Ansprüche, wobei die Berechtigungstoken durch die Webanwendung (107) auf dem Nutzer-Computersystem (104, 162, 168) von dem Dateimanagementserver-Computersystem (130) empfangen werden, wobei die empfangenen Berechtigungstoken ein Berechtigungstoken von jedem der in dem Verteilungsplan (177, 416) identifizierten mehreren Speicherdiensten (SD1-SD6) umfassen, welche auf Veranlassung des Webserver-Computersystem (108) durch das Dateimanagementserver-Computersystem (130) angeforderter und an das Nutzer-Computersystem (104, 162, 168) weitergeleitet wurden.

4. Verfahren nach Anspruch 3, wobei das Empfangen der Berechtigungstoken ein erfolgreiches Authentifizieren des Webserver-Computersystems (108) gegenüber dem Dateimanagementserver-Computersystem (130) voraussetzt.

5. Verfahren nach einem der vorangehenden Ansprüche, wobei das Senden der Dateifragmente (F1-F4) durch die Webanwendung (107) an die identifizierten Speicherdienste (SD1-SD6) unter Umgehung des Webserver-Computersystems (108) und/oder des Dateimanagementserver-Computersystems (130) erfolgt, und/oder
wobei die Berechtigungstoken als URLs ausgebildet sind, die jeweils einen direkten Lesezugriff auf einen durch die URL identifizierten Speicherplatz auf einem der Speichermedien (SM1-SM6) eines der Speicherdienste (SD1-SD6) ermöglichen.

6. Verfahren nach einem der vorangehenden Ansprüche, wobei das Verfahren ferner ein Erstellen von Referenzdaten umfasst, welche der Datei (101) zugeordnet sind, zur Rekonstruktion der Datei (101) aus den verteilt gespeicherten Dateifragmenten (F1-F4) dienen und von dem Webserver-Computersystem (108) gespeichert werden.

7. Verfahren nach Anspruch 6, wobei die Referenzdaten umfassen: einen Identifikator des Nutzers (102, 160), einen Identifikator der Datei (101), einen Identifikator des Verteilungsplans (177, 416), einen Identifikator eines kryptographischen Schlüssels zum Entschlüsseln der verschlüsselten Datei (101), einen Identifikator eines kryptographischen Schlüssels (138, 166, 172) zum Entschlüsseln des verschlüsselten Verteilungsplans (177, 416), einen Hash-Wert der vollständigen Datei (101) und/oder Hash-Werte der gespeicherten Dateifragmente (F1-F4), und/oder
wobei die Referenzdaten von dem Webserver-Computersystem (108) in kryptographisch gesicherter Form gespeichert werden, und/oder
wobei die Webanwendung (107) die Referenzdaten an ein Servermodul (368) zum Verwalten von Referenzdaten kommuniziert, welches durch einen Prozessor (350) des Webserver-Computersystem (108) ausgeführt wird, und/oder
wobei die Referenzdaten von dem Webserver-Computersystem (108) in einer Referenzliste mit einer Mehrzahl von Referenzdaten für eine Mehrzahl von Dateien verschiedener Nutzer (102, 160) der Webanwendung (107) gespeichert werden.

8. Verfahren nach einem der vorangehenden Ansprüche, wobei das Verfahren ferner ein Authentifizieren des Nutzers (102, 160) gegenüber dem Webserver-Computersystem (108) umfasst, und/oder
wobei in die Webanwendung (107) ein oder mehrere Module (110, 111, 113) zum verteilten Speichern der Datei (101) auf den Speicherdiensten (SD1-SD6) eingebunden sind und wobei das Verschlüsseln, Fragmentieren und Senden durch ein Ausführen der Module (110, 111, 113) der Webanwendung (107) in dem Webbrowser (106) durch einen Prozessor (135) des Nutzer-Computersystems (104, 162, 168) erfolgen.

9. Verfahren nach einem der vorangehenden Ansprüche, wobei das Verfahren zum Herunterladen der kryptographisch gesichert gespeicherten Datei (101) unter Verwendung der Webanwendung (107), welche von dem Webbrowser (106) auf dem Nutzer-Computersystem (104, 162, 168) ausgeführt wird, ferner umfasst:
• Aufrufen der Webanwendung (107) von dem Webserver-Computersystem (108) über das Netzwerk (178) durch den Webbrowser (106) auf dem Nutzer-Computersystem (104, 162, 168),
• Bereitstellen des Verteilungsplans (177, 416) der verteilt gespeicherten Datei (101) durch die Webanwendung (107), wobei der Verteilungsplan (177, 416) Instruktionen zum Defragmentieren der Datei (101) aus einer Mehrzahl von Dateifragmenten (F1-F4) mittels eines Fehlerkorrekturverfahrens (FKV) und Identifikatoren der Mehrzahl voneinander unabhängiger Speicherdienste (SD1-SD6) umfasst, in deren nichtflüchtigen Speichermedien (SM1-SM6) die Dateifragmente (F1-F4) gespeichert sind,
• Bereitstellen eines Berechtigungstokens von jedem der Speicherdienste zumindest einer Auswahl der Speicherdienste (SD1-SD6), in deren nichtflüchtigen Speichermedien (SM1-SM6) die Dateifragmente (F1-F4) gespeichert sind, durch das Webserver-Computersystem (108), wobei die von der Auswahl der Speicherdienste (SD1-SD6) umfassten Dateifragmente (F1-F4) hinreichend für eine vollständige Rekonstruktion der Datei (101) sind,
• Herunterladen der Dateifragmente (F1-F4) von den einzelnen Speicherdiensten unter Verwendung der Berechtigungstoken als Berechtigungsnachweise zum Herunterladen,
• Defragmentieren der verschlüsselten Datei (101) aus den Dateifragmenten (F1-F4) auf dem Nutzer-Computersystem (104, 162, 168) durch die Webanwendung (107) mittels des Fehlerkorrekturverfahren (FKV) gemäß dem Verteilungsplan (177, 416),
• Entschlüsseln der verschlüsselten Datei (101) mit einem kryptographischen Schlüssel auf dem Nutzer-Computersystem (104, 162, 168) durch die Webanwendung.

10. Verfahren nach Anspruch 9, wobei das Webserver-Computersystem (108) über die Webanwendung (107) einen Dienst bereitstellt und wobei von der heruntergeladenen Datei (101) umfasste Daten im Zuge eines Ausführens des Dienstes durch die Webanwendung (107) verwendet werden, und/oder
wobei das Bereitstellen des Verteilungsplans (177, 416) ein Empfangen des Verteilungsplans (177, 416) von dem Dateimanagementserver-Computersystem (130) auf dem Nutzer-Computersystem (104, 162, 168) durch die Webanwendung (107) umfasst.
wobei der Verteilungsplan (177, 416) in verschlüsselter Form bereitgestellt wird und das Bereitstellen ferner ein Entschlüsseln des Verteilungsplans (177, 416) auf dem Nutzer-Computersystem (104, 162, 168) durch die Webanwendung (107) umfasst.
wobei das Bereitstellen der Berechtigungstoken auf dem Nutzer-Computersystem (104, 162, 168) durch die Webanwendung (107) ein Empfangen der Berechtigungstoken von dem Dateimanagementserver-Computersystem (130) umfasst, welche auf Veranlassung des Webserver-Computersystem (108) durch das Dateimanagementserver-Computersystem (130) angeforderter und an das Nutzer-Computersystem (104, 162, 168) weitergeleitet wurden,
wobei das Empfangen der Berechtigungstoken beispielsweise ein erfolgreiches Authentifizieren des Webserver-Computersystems (108) gegenüber dem Dateimanagementserver-Computersystem (130) voraussetzt, und/oder
wobei das Herunterladen der Dateifragmente (F1-F4) durch die Webanwendung (107) von den identifizierten Speicherdiensten (SD1-SD6) unter Umgehung des Webserver-Computersystems (108) und/oder des Dateimanagementserver-Computersystems (130) erfolgt, und/oder
wobei das Verfahren ferner ein Empfangen von Referenzdaten, welche der herunterzuladenden Datei (101) zugeordnet sind und zur Rekonstruktion der Datei (101) aus den verteilt gespeicherten Dateifragmenten (F1-F4) dienen, von dem Webserver-Computersystem (108) durch die Webanwendung (107) auf dem Nutzer-Computersystem (104, 162, 168) umfasst, und/oder
wobei das Herunterladen der Datei (101) ein erfolgreiches Authentifizieren des Nutzers (102, 160) gegenüber dem Webserver-Computersystem (108) voraussetzt, und/oder
wobei in die Webanwendung (107) ein oder mehrere Module (110, 111, 113) zum verteilten Speichern der Datei (101) auf den Speicherdiensten (SD1-SD6) eingebunden sind und wobei das Herunterladen, Defragmentieren und Entschlüsseln durch ein Ausführen der Module (110, 111, 113) der Webanwendung (107) in dem Webbrowser (106) durch den Prozessor des (135) Nutzer-Computersystems (104, 162, 168) erfolgen.

11. Nutzer-Computersystem (104, 162, 168) umfassend einen Prozessor (135), eine Netzwerkschnittstelle (131) zur operativen Kopplung des Nutzer-Computersystems (104, 162, 168) an ein Webserver-Computersystem (108) und eine Mehrzahl von Speicherdiensten (SD1-SD6) über ein Netzwerk (178), wobei das Nutzer-Computersystem (104, 162, 168) ein Speichermedium (105) mit einem von dem Prozessor (135) ausführbaren Webbrowser (106) umfasst, wobei der Webbrowser (106) zur Ausführung folgenden Verfahrens zum kryptographisch gesicherten Speichern einer Datei (101) unter Verwendung einer von dem Webbrowser (106) ausgeführten Webanwendung (107) konfiguriert ist:
• Aufrufen der Webanwendung (107) von dem Webserver-Computersystem (108) über das Netzwerk (178) durch den Webbrowser (106) auf dem Nutzer-Computersystem (104, 162, 168),
• Verschlüsseln der Datei (101) mit einem kryptographischen Schlüssel lokal auf dem Nutzer-Computersystem (104, 162, 168) durch die Webanwendung (107),
• Bereitstellen eines Verteilungsplans (177, 416) durch die Webanwendung (107), wobei der Verteilungsplan (177, 416) Instruktionen zum Fragmentieren der Datei (101) in eine Mehrzahl von Dateifragmenten (F1-F4) mittels eines Fehlerkorrekturverfahrens (FKV) und Identifikatoren der Mehrzahl von Speicherdiensten (SD1-SD6) umfasst, in deren nichtflüchtigen Speichermedien (SM1-SM6) die erzeugten Dateifragmente (F1-F4) gespeichert werden sollen, **dadurch gekennzeichnet, dass**
• das Fragmentieren der verschlüsselten Datei (101) auf dem Nutzer-Computersystem (104, 162, 168) durch die Webanwendung (107) in eine Mehrzahl von Dateifragmente (F1-F4) mittels des Fehlerkorrekturverfahren (FKV) gemäß dem Verteilungsplan (177, 416) erfolgt, wobei zumindest eines der Dateifragmente (F1-F4) Fehlerkorrekturbits beinhaltet,
• ein Senden der resultierenden Dateifragmente (F1-F4) durch die Webanwendung (107) über das Netzwerk (178) an die von dem Verteilungsplan (177, 416) identifizierten Speicherdienste (SD1-SD6) erfolgt, wobei von dem Webserver-Computersystem (108) für jeden der Speicherdienste (SD1-SD6) jeweils ein Berechtigungstoken als Berechtigungsnachweis zum Speichern des entsprechenden Dateifragments (F1-F4) bereitgestellt wird.

12. Webserver-Computersystem (108) umfassend einen Prozessor (350), eine Netzwerkschnittstelle (132) zur operativen Kopplung des Webserver-Computersystems (108) an ein Nutzer-Computersystem (104, 162, 168), wobei das Webserver-Computersystem (108) ein Speichermedium (352) mit Programminstruktionen umfasst, wobei die Programminstruktionen dazu konfiguriert sind bei einem Ausführen durch den Prozessor (350), in Antwort auf ein Empfangen eines Aufrufs einer Webanwendung (107) von einem Webbrowser (106) des Nutzer-Computersystems (104, 162, 168) über das Netzwerk (178), Programminstruktionen zum Ausführen der Webanwendung (107) in einem Webbrowser (106) auf dem Nutzer-Computersystem (104, 162, 168) über das Netzwerk (178) an das Nutzer-Computersystem (104, 162, 168) zu senden, wobei die Webanwendung (107) zur Ausführung folgenden Verfahrens zum kryptographisch gesicherten Speichern einer Datei (101) konfiguriert ist:
• Verschlüsseln der Datei (101) mit einem kryptographischen Schlüssel lokal auf dem Nutzer-Computersystem (104, 162, 168) durch die Webanwendung (107),
• Bereitstellen eines Verteilungsplans (177, 416) durch die Webanwendung (107), wobei der Verteilungsplan (177, 416) Instruktionen zum Fragmentieren der Datei (101) in eine Mehrzahl von Dateifragmenten (F1-F4) mittels eines Fehlerkorrekturverfahrens (FKV) und Identifikatoren einer Mehrzahl von Speicherdiensten (SD1-SD6) umfasst, in deren nichtflüchtigen Speichermedien (SM1-SM6) die erzeugten Dateifragmente (F1-F4) gespeichert werden sollen, **dadurch gekennzeichnet, dass**
• das Fragmentieren der verschlüsselten Datei (101) auf dem Nutzer-Computersystem (104, 162, 168) durch die Webanwendung (107) in eine Mehrzahl von Dateifragmente (F1-F4) mittels des Fehlerkorrekturverfahren (FKV) gemäß dem Verteilungsplan (177, 416) erfolgt, wobei zumindest eines der Dateifragmente (F1-F4) Fehlerkorrekturbits beinhaltet,
• ein Senden der resultierenden Dateifragmente (F1-F4) durch die Webanwendung (107) über das Netzwerk (178) an die von dem Verteilungsplan (177, 416) identifizierten Speicherdienste(SD1-SD6) erfolgt, wobei von dem Webserver-Computersystem (108) für jeden der Speicherdienste (SD1-SD6) jeweils ein Berechtigungstoken als Berechtigungsnachweis zum Speichern des entsprechenden Dateifragments (F1-F4) bereitgestellt wird.

13. Webserver-Computersystem nach Anspruch 12, wobei das Webserver-Computersystem (108) ferner dazu konfiguriert ist, über die Webanwendung (107) einen Dienst bereitzustellen, wobei die zu speichernde Datei (101) im Zuge eines Ausführens des Dienstes durch die Webanwendung (107) erzeugt werden.

14. System mit einem Dateimanagementserver-Computersystem (130), einem Webserver-Computersystem (108) nach einem der Ansprüche 12 oder 13 und zumindest einem Nutzer-Computersystem (104, 162, 168) nach Anspruch 11, wobei das Dateimanagementserver-Computersystem (130) einen Prozessor (342), eine Netzwerkschnittstelle (133) zur operativen Kopplung des Dateimanagementserver-Computersystems (130) mit dem Webserver-Computersystem (108), mit dem zumindest einen Nutzer-Computersystem (104, 162, 168) und mit einer Mehrzahl von Speicherdiensten (SD1-SD6) über ein Netzwerk (178), und ein Speichermedium (302) mit Programminstruktionen umfasst, wobei die Programminstruktionen dazu konfiguriert sind bei einem Ausführen durch den Prozessor (342) zur Ausführung folgenden Verfahrens zum kryptographisch gesicherten Speichern einer Datei (101) konfiguriert sind:
• Empfangen einer Berechtigungsanfrage des Webserver-Computersystem (108) zum Speichern von Dateifragmenten (F1-F4) der Datei (101) über das Netzwerk (178) in der Mehrzahl von Speicherdiensten (SD1-SD6) gemäß einem Verteilungsplan (177, 416), wobei das Dateimanagementserver-Computersystem (130) keinen der Speicherdienst (SD1-SD6) bereitstellt,
• In Antwort auf das Empfangen der Berechtigungsanfrage, Anfordern eines Berechtigungstokens von jedem der mehreren Speicherdienste (SD1-SD6) und Weiterleitung der in Antwort auf das Anfordern erhaltenen Berechtigungstoken an das zumindest eine Nutzer-Computersystem (104, 162, 168),
• Speichern des Verteilungsplans (177, 416), wobei der Verteilungsplan (177, 416) Instruktionen zum Defragmentieren der Datei (101) aus einer Mehrzahl von Dateifragmenten (F1-F4) mittels eines Fehlerkorrekturverfahrens (FKV) und Identifikatoren der Mehrzahl von Speicherdiensten (SD1-SD6) umfasst, in deren nichtflüchtigen Speichermedien (SM1-SM6) die Dateifragmente (F1-F4) gespeichert sind.

## Claims

1. A method for cryptographically secure storing of a file (101) using a web application (107) executed by a web browser (106) on a user computer system (104, 162, 168) of a user (102, 160), the method comprising
- invoking the web application (107) from a web server computer system (108) over a network (178) by the web browser (106) on the user computer system (104, 162, 168),
- encrypting the file (101) with a cryptographic key locally on the user computer system (104, 162, 168) using the web application (107),
- providing a distribution plan (177, 416) by the web application (107), wherein the distribution plan (177, 416) comprises instructions for fragmenting the file (101) into a plurality of file fragments (F1-F4) by means of an error correction method (ECM) and identifiers of a plurality of mutually independent storage services (SS1-SS6) in whose non-volatile storage media (SM1-SM6) the generated file fragments (F1-F4) are to be stored, **characterized in that**
- the encrypted file (101) is fragmented on the user computer system (104, 162, 168) by the web application (107) into a plurality of file fragments (F1-F4) by the error correction method (ECM) according to the distribution plan (177, 416), wherein at least one of the file fragments (F1-F4) includes error correction bits,
- the resulting file fragments (F1-F4) are sent by the web application (107) over the network (178) to the storage services (SS1-SS6) identified by the distribution plan (177, 416), wherein an authorization token is provided by the web server computer system (108) for each of the storage services (SS1-SS6) as proof of authorization to store the corresponding file fragment (F1-F4).

2. The method of claim 1, wherein the web server computer system (108) provides a service via the web application (107), wherein the file (101) to be stored comprises data generated and/or used in the course of executing the service, and/or
wherein the providing of the distribution plan (177, 416) comprises generating the distribution plan (177, 416) on the user computer system (104, 162, 168) by the web application (107) or receiving the distribution plan (177, 416) on the user computer system (104, 162, 168) by the web application (107), and/or
wherein the method further comprises sending the distribution plan (177, 416) from the web application (107) over the network (178) to a file management server computer system (130) for storage, and/or
wherein the method further comprising encrypting the distribution plan (177, 416).

3. The method of any one of the preceding claims, wherein the authorization tokens are received by the web application (107) on the user computer system (104, 162, 168) from the file management server computer system (130), wherein the received authorization tokens comprise an authorization token of each of the plurality of storage services (SS1-SS6) identified in the distribution plan (177, 416), which were requested by the file management server computer system (130) on command of the web server computer system (108) and forwarded to the user computer system (104, 162, 168).

4. The method of claim 3, wherein the receiving of the authorization tokens requires successful authentication of the web server computer system (108) against the file management server computer system (130).

5. The method of any one of the preceding claims, wherein the sending of the file fragments (F1-F4) by the web application (107) to the identified storage services (SS1-SS6) is performed bypassing the web server computer system (108) and/or the file management server computer system (130), and/or
wherein the authorization tokens are implemented as URLs each enabling direct read access to a storage location identified by the URL on one of the storage media (SM1-SM6) of one of the storage services (SS1-SS6).

6. The method of any one of the preceding claims, wherein the method further comprises creating reference data, which are associated with the file (101), serve to reconstruct the file (101) from the distributedly stored file fragments (F1-F4) and are stored by the web server computer system (108).

7. The method of claim 6, wherein the reference data comprises: an identifier of the user (102, 160), an identifier of the file (101), an identifier of the distribution plan (177, 416), an identifier of a cryptographic key for decrypting the encrypted file (101), an identifier of a cryptographic key (138, 166, 172) for decrypting the encrypted distribution plan (177, 416), a hash value of the complete file (101) and/or hash values of the stored file fragments (F1-F4), and/or
wherein the reference data is stored by the web server computer system (108) in a cryptographically secure form, and/or
wherein the web application (107) communicates the reference data to a server module (368) for managing reference data, which is executed by a processor (350) of the web server computer system (108), and/or
wherein the reference data is stored by the web server computer system (108) in a reference list comprising a plurality of reference data for a plurality of files of different users (102, 160) of the web application (107).

8. The method of any of the preceding claims, wherein the method further comprises authenticating the user (102, 160) against the web server computer system (108), and/or
wherein one or more modules (110, 111, 113) for a distributed storage of the file (101) on the storage services (SS1-SS6) are integrated into the web application (107), and wherein the encryption, fragmentation and transmission are performed by executing the modules (110, 111, 113) of the web application (107) in the web browser (106) by a processor (135) of the user computer system (104, 162, 168).

9. The method of any one of the preceding claims, wherein the method for downloading the cryptographically secured stored file (101) using the web application (107) executed by the web browser (106) on the user computer system (104, 162, 168) further comprises:
- invoking the web application (107) from the web server computer system (108) over the network (178) by the web browser (106) on the user computer system (104, 162, 168),
- providing the distribution plan (177, 416) of the distributedly stored file (101) by the web application (107), wherein the distribution plan (177, 416) comprises instructions for defragmenting the file (101) from a plurality of file fragments (F1-F4) by means of an error correction method (ECM) and identifiers of the plurality of mutually independent storage services (SS1-SS6) in whose non-volatile storage media (SM1-SM6) the file fragments (F1-F4) are stored,
- providing by the web server computer system (108) an authorization token of each of the storage services of at least a selection of the storage services (SS1-SS6) in whose non-volatile storage media (SM1-SM6) the file fragments (F1-F4) are stored, wherein the file fragments (F1-F4) included in the selection of the storage services (SS1-SS6) are sufficient for a complete reconstruction of the file (101),
- downloading the file fragments (F1-F4) from the individual storage services using the authorization tokens as proof of authorization for downloading,
- defragmenting the encrypted file (101) from the file fragments (F1-F4) on the user computer system (104, 162, 168) by the web application (107) using the error correction method (ECM) in accordance with the distribution plan (177, 416),
- decrypting the encrypted file (101) with a cryptographic key on the user computer system (104, 162, 168) by the web application.

10. The method of claim 9, wherein the web server computer system (108) provides a service via the web application (107), and wherein data included in the downloaded file (101) is used in the course of execution of the service by the web application (107), and/or
wherein the providing of the distribution plan (177, 416) comprises receiving the distribution plan (177, 416) from the file management server computer system (130) on the user computer system (104, 162, 168) by the web application (107),
wherein the distribution plan (177, 416) is provided in encrypted form, and the providing further comprises decrypting the distribution plan (177, 416) on the user computer system (104, 162, 168) by the web application (107),
wherein the providing of the authorization tokens on the user computer system (104, 162, 168) by the web application (107) comprises receiving the authorization tokens from the file management server computer system (130), which were requested by the file management server computer system (130) on command of the web server computer system (108) and forwarded to the user computer system (104, 162, 168),
wherein receiving the authorization tokens requires successful authentication of the web server computer system (108) against the file management server computer system (130), and/or
wherein the downloading of the file fragments (F1-F4) by the web application (107) from the identified storage services (SS1-SS6) is performed bypassing the web server computer system (108) and/or the file management server computer system (130), and/or
wherein the method further comprises receiving reference data associated with the file (101) to be downloaded and serving to reconstruct the file (101) from the distributedly stored file fragments (F1-F4), from the web server computer system (108) by the web application (107) on the user computer system (104, 162, 168), and/or
wherein the downloading of the file (101) requires successful authentication of the user (102, 160) against the web server computer system (108), and/or
wherein one or more modules (110, 111, 113) for a distributed storage of the file (101) on the storage services (SS1-SS6) are integrated into the web application (107), and wherein the downloading, defragmentation and decryption are performed by executing the modules (110, 111, 113) of the web application (107) in the web browser (106) by the processor (135) of the user computer system (104, 162, 168).

11. A user computer system (104, 162, 168) comprising a processor (135), a network interface (131) for operatively coupling the user computer system (104, 162, 168) to a web server computer system (108) and a plurality of storage services (SS1-SS6) over a network (178), wherein the user computer system (104, 162, 168) comprises a storage medium (105) having a web browser (106) executable by the processor (135), wherein the web browser (106) is configured to execute the following method for cryptographically secure storing of a file (101) using a web application (107) executed by the web browser (106):
- invoking the web application (107) from the web server computer system (108) over the network (178) by the web browser (106) on the user computer system (104, 162, 168),
- encrypting the file (101) with a cryptographic key locally on the user computer system (104, 162, 168) using the web application (107),
- providing a distribution plan (177, 416) by the web application (107), wherein the distribution plan (177, 416) comprises instructions for fragmenting the file (101) into a plurality of file fragments (F1-F4) by means of an error correction method (ECM) and identifiers of the plurality of storage services (SS1-SS6) in whose non-volatile storage media (SM1-SM6) the generated file fragments (F1-F4) are to be stored, **characterized in that**
- the encrypted file (101) is fragmented on the user computer system (104, 162, 168) by the web application (107) into a plurality of file fragments (F1-F4) by the error correction method (ECM) according to the distribution plan (177, 416), wherein at least one of the file fragments (F1-F4) includes error correction bits,
- the resulting file fragments (F1-F4) are sent by the web application (107) over the network (178) to the storage services (SS1-SS6) identified by the distribution plan (177, 416), wherein an authorization token is provided by the web server computer system (108) for each of the storage services (SS1-SS6) as proof of authorization to store the corresponding file fragment (F1-F4).

12. A web server computer system (108) comprising a processor (350), a network interface (132) for operatively coupling the web server computer system (108) to a user computer system (104, 162, 168), wherein the web server computer system (108) comprises a storage medium (352) containing program instructions, wherein the program instructions are configured, when executed by the processor (350), to send program instructions for executing the web application (107) in a web browser (106) on the user computer system (104, 162, 168) over the network (178) to the user computer system (104, 162, 168) in response to receiving an invocation of a web application (107) from a web browser (106) on the user computer system (104, 162, 168) over the network (178), wherein the web application (107) is configured to perform the following method for cryptographically secure storing of a file (101):
- encrypting the file (101) with a cryptographic key locally on the user computer system (104, 162, 168) using the web application (107),
- providing a distribution plan (177, 416) by the web application (107), wherein the distribution plan (177, 416) comprises instructions for fragmenting the file (101) into a plurality of file fragments (F1-F4) by means of an error correction method (ECM) and identifiers of a plurality of storage services (SS1-SS6) in whose non-volatile storage media (SM1-SM6) the generated file fragments (F1-F4) are to be stored, **characterized in that**
- the encrypted file (101) is fragmented on the user computer system (104, 162, 168) by the web application (107) into a plurality of file fragments (F1-F4) by the error correction method (ECM) according to the distribution plan (177, 416), wherein at least one of the file fragments (F1-F4) includes error correction bits,
- the resulting file fragments (F1-F4) are sent by the web application (107) over the network (178) to the storage services (SS1-SS6) identified by the distribution plan (177, 416), wherein an authorization token is provided by the web server computer system (108) for each of the storage services (SS1-SS6) as proof of authorization to store the corresponding file fragment (F1-F4).

13. The web server computer system of claim 12, wherein the web server computer system (108) is further configured to provide a service via the web application (107), wherein the file (101) to be stored is generated in a course of execution of the service by the web application (107).

14. A system comprising a file management server computer system (130), a web server computer system (108) according to any one of claims 12 or 13, and at least one user computer system (104, 162, 168) according to claim 11, wherein the file management server computer system (130) comprises a processor (342), a network interface (133) for operatively coupling the file management server computer system (130) to the web server computer system (108), to the at least one user computer system (104, 162, 168) and to a plurality of storage services (SS1-SS6) over a network (178), and a storage medium (302) having program instructions, wherein the program instructions are configured, when executed by the processor (342), to perform the following method for cryptographically secure storing of a file (101):
- receiving an authorization request from the web server computer system (108) to store file fragments (F1-F4) of the file (101) over the network (178) in the plurality of storage services (SS1-SS6) according to a distribution plan (177, 416), wherein the file management server computer system (130) does not provide any of the storage services (SS1-SS6),
- in response to receiving the authorization request, requesting an authorization token from each of the multiple storage services (SS1-SS6) and forwarding the authorization tokens received in response to the request to the at least one user computer system (104, 162, 168),
- storing the distribution plan (177, 416), wherein the distribution plan (177, 416) comprises instructions for defragmenting the file (101) from a plurality of file fragments (F1-F4) by means of an error correction method (ECM) and identifiers of the plurality of storage services (SS1-SS6) in whose non-volatile storage media (SM1-SM6) the file fragments (F1-F4) are stored.

## Revendications

1. Procédé de stockage sécurisé de manière cryptographique d'un fichier (101) en utilisant une application web (107) exécutée par un navigateur web (106) sur un système informatique utilisateur (104, 162, 168) d'un utilisateur (102, 160), le procédé comprenant les étapes consistant à
- faire appeler l'application web (107) depuis un système informatique de serveur web (108) sur un réseau (178) par le navigateur web (106) sur le système informatique utilisateur (104, 162, 168),
- chiffrer le fichier (101) avec une clé cryptographique localement sur le système informatique utilisateur (104, 162, 168) en utilisant l'application web (107),
- faire fournir un plan de distribution (177, 416) par l'application web (107), dans lequel le plan de distribution (177, 416) comprend des instructions pour fragmenter le fichier (101) en une pluralité de fragments de fichier (F1 à F4) au moyen d'une méthode de correction d'erreurs (ECM) et des identifiants d'une pluralité de services de stockage (SS1 à SS6) mutuellement indépendants dans les supports de stockage non volatils (SM1 à SM6) desquels les fragments de fichier (F1 à F4) générés doivent être stockés, **caractérisé en ce que**
- le fichier chiffré (101) est fragmenté sur le système informatique utilisateur (104, 162, 168) par l'application web (107) en une pluralité de fragments de fichier (F1 à F4) par la méthode de correction d'erreurs (ECM) conformément au plan de distribution (177, 416), dans lequel au moins l'un des fragments de fichier (F1 à F4) inclut des bits de correction d'erreurs,
- les fragments de fichier (F1 à F4) résultants sont envoyés par l'application web (107) sur le réseau (178) aux services de stockage (SS1 à SS6) identifiés par le plan de distribution (177, 416), dans lequel un jeton d'autorisation est fourni par le système informatique de serveur web (108) pour chacun des services de stockage (SS1 à SS6) en tant que preuve d'autorisation pour stocker le fragment de fichier (F1 à F4) correspondant.

2. Procédé selon la revendication 1, dans lequel le système informatique de serveur web (108) fournit un service par l'intermédiaire de l'application web (107), dans lequel le fichier (101) à stocker comprend des données générées et/ou utilisées au cours de l'exécution du service, et/ou
dans lequel l'étape consistant à fournir le plan de distribution (177, 416) comprend une étape consistant à faire générer le plan de distribution (177, 416) sur le système informatique utilisateur (104, 162, 168) par l'application web (107) ou à faire recevoir le plan de distribution (177, 416) sur le système informatique utilisateur (104, 162, 168) par l'application web (107), et/ou
dans lequel le procédé comprend en outre une étape consistant à envoyer le plan de distribution (177, 416) depuis l'application web (107) sur le réseau (178) à un système informatique de serveur de gestion de fichiers (130) pour le stockage, et/ou
dans lequel le procédé comprend en outre une étape consistant à chiffrer le plan de distribution (177, 416).

3. Procédé selon l'une quelconque des revendications précédentes, dans lequel les jetons d'autorisation sont reçus par l'application web (107) sur le système informatique utilisateur (104, 162, 168) depuis le système informatique de serveur de gestion des fichiers (130), dans lequel les jetons d'autorisation reçus comprennent un jeton d'autorisation de chacun de la pluralité de services de stockage (SS1 à SS6) identifiés dans le plan de distribution (177, 416), qui ont été requis par le système informatique de serveur de gestion de fichiers (130) sur ordre du système informatique de serveur web (108) et transférés au système informatique utilisateur (104, 162, 168).

4. Procédé selon la revendication 3, dans lequel l'étape consistant à recevoir les jetons d'autorisation exige une authentification réussie du système informatique de serveur web (108) vis-à-vis du système informatique de serveur de gestion de fichiers (130).

5. Procédé selon l'une quelconque des revendications précédentes, dans lequel l'étape consistant à faire envoyer les fragments de fichier (F1 à F4) par l'application web (107) aux services de stockage (SS1 à SS6) identifiés est réalisée en contournant le système informatique de serveur web (108) et/ou le système informatique de serveur de gestion de fichiers (130), et/ou
dans lequel les jetons d'autorisation sont mis en œuvre en tant qu'URL, chacun permettant un accès en lecture direct à un emplacement de stockage identifié par l'URL sur l'un des supports de stockage (SM1 à SM6) de l'un des services de stockage (SS1 à SS6).

6. Procédé selon l'une quelconque des revendications précédentes, dans lequel le procédé comprend en outre une étape consistant à créer des données de référence, qui sont associées au fichier (101), servent à reconstruire le fichier (101) depuis les fragments de fichier (F1 à F4) stockés de manière distribuée et sont stockées par le système informatique de serveur web (108).

7. Procédé selon la revendication 6, dans lequel les données de référence comprennent : un identifiant de l'utilisateur (102, 160), un identifiant du fichier(101), un identifiant du plan de distribution (177, 416), un identifiant d'une clé cryptographique pour déchiffrer le fichier chiffré (101), un identifiant d'une clé cryptographique (138, 166, 172) pour déchiffrer le plan de distribution (177, 416) chiffré, une valeur de hachage du fichier complet (101) et/ou des valeurs de hachage des fragments de fichier (F1 à F4) stockées, et/ou
dans lequel les données de référence sont stockées par le système informatique de serveur web (108) sous une forme sécurisée de manière cryptographique, et/ou
dans lequel l'application web (107) communique les données de référence à un module de serveur (368) pour gérer les données de référence, qui est exécuté par un processeur (350) du système informatique de serveur web (108), et/ou
dans lequel les données de référence sont stockées par le système informatique de serveur web (108) dans une liste de références comprenant une pluralité de données de référence pour une pluralité de fichiers d'utilisateurs (102, 160) différents de l'application web (107).

8. Procédé selon l'une quelconque des revendications précédentes, dans lequel le procédé comprend en outre une étape consistant à authentifier l'utilisateur (102, 160) vis-à-vis du système informatique de serveur web (108), et/ou
dans lequel un ou plusieurs modules (110, 111, 113) pour un stockage distribué du fichier (101) sur les services de stockage (SS1 à SS6) sont intégrés dans l'application web (107), et dans lequel le chiffrage, la fragmentation et la transmission sont réalisés en exécutant les modules (110, 111, 113) de l'application web (107) dans le navigateur web (106) par un processeur (135) du système informatique utilisateur (104, 162, 168).

9. Procédé selon l'une quelconque des revendications précédentes, dans lequel le procédé consistant à télécharger le fichier (101) stocké de manière sécurisée et cryptographique en utilisant l'application web (107) exécutée par le navigateur web (106) sur le système informatique utilisateur (104, 162, 168) comprend en outre des étapes consistant à :
- faire appeler l'application web (107) depuis le système informatique de serveur web (108) sur le réseau (178) par le navigateur web (106) sur le système informatique utilisateur (104, 162, 168),
- faire fournir le plan de distribution (177, 416) du fichier (101) stocké de manière distribuée par l'application web (107), dans lequel le plan de distribution (177, 416) comprend des instructions pour défragmenter le fichier (101) depuis une pluralité de fragments de fichier (F1 à F4) au moyen d'une méthode de correction d'erreurs (ECM) et des identifiants de la pluralité de services de stockage (SS1 à SS6) mutuellement indépendants dans les supports de stockage non volatils (SM1 à SM6) desquels les fragments de fichier (F1 à F4) sont stockés,
- faire fournir par le système informatique de serveur web (108) un jeton d'autorisation de chacun des services de stockage d'au moins une sélection des services de stockage (SS1 à SS6) dans les supports de stockage non volatils (SM1 à SM6) desquels les fragments de fichier (F1 à F4) sont stockés, dans lequel les fragments de fichier (F1 à F4) inclus dans la sélection des services de stockage (SS1 à SS6) sont suffisants pour une reconstruction complète du fichier (101),
- télécharger les fragments de fichier (F1 à F4) depuis les services de stockage individuel en utilisant les jetons d'autorisation en tant que preuve d'autorisation pour le téléchargement,
- faire défragmenter le fichier chiffré (101) depuis les fragments de fichier (F1 à F4) sur le système informatique utilisateur (104, 162, 168) par l'application web (107) en utilisant la méthode de correction d'erreurs (ECM) conformément au plan de distribution (177, 416),
- faire déchiffrer le fichier (101) chiffré avec une clé cryptographique sur le système informatique utilisateur (104, 162, 168) par l'application web.

10. Procédé selon la revendication 9, dans lequel le système informatique de serveur web (108) fournit un service par l'intermédiaire de l'application web (107), et dans lequel les données incluses dans le fichier (101) téléchargé sont utilisées au cours de l'exécution du service par l'application web (107), et/ou
dans lequel l'étape consistant à fournir le plan de distribution (177, 416) comprend une étape consistant à recevoir le plan de distribution (177, 416) depuis le système informatique de serveur de gestion de fichiers (130) sur le système informatique utilisateur (104, 162, 168) par l'application web (107),
dans lequel le plan de distribution (177, 416) fourni sous forme chiffrée, et l'étape consistant à fournir comprend en outre une étape consistant à faire déchiffrer le plan de distribution (177, 416) sur le système informatique utilisateur (104, 162, 168) par l'application web (107),
dans lequel l'étape consistant à faire fournir les jetons d'autorisation sur le système informatique utilisateur (104, 162, 168) par l'application web (107) comprend une étape consistant à recevoir les jetons d'autorisation depuis le système informatique de serveur de gestion de fichiers (130), qui sont requis par le système informatique de serveur de gestion de fichiers (130) sur ordre du système informatique de serveur web (108) et transférés au système informatique utilisateur (104, 162, 168),
dans lequel l'étape consistant à recevoir les jetons d'autorisation exige une authentification réussie du système informatique de serveur web (108) vis-à-vis du système informatique de serveur de gestion de fichiers (130), et/ou
dans lequel l'étape consistant à faire télécharger les fragments de fichier (F1 à F4) par l'application web (107) depuis les services de stockage (SS1 à SS6) identifiés est réalisée en contournant le système informatique de serveur web (108) et/ou le système informatique de serveur de gestion de fichiers (130), et/ou
dans lequel le procédé comprend en outre une étape consistant à recevoir des données de référence associées au fichier (101) à télécharger et servant à reconstruire le fichier (101) depuis les fragments de fichier (F1 à F4) stockés de manière distribuée, depuis le système informatique de serveur web (108) par l'application web (107) sur le système informatique utilisateur (104, 162, 168), et/ou
dans lequel l'étape consistant à télécharger le fichier (101) exige une authentification réussie de l'utilisateur (102, 160) vis-à-vis du système informatique de serveur web (108), et/ou
dans lequel un ou plusieurs modules (110, 111, 113) pour un stockage distribué du fichier (101) sur les services de stockage (SS1 à SS6) sont intégrés dans l'application web (107), et dans lequel le téléchargement, la défragmentation et le déchiffrage sont réalisés en exécutant les modules (110, 111, 113) de l'application web (107) du navigateur web (106) par le processeur (135) du système informatique utilisateur (104, 162, 168).

11. Système informatique utilisateur (104, 162, 168) comprenant un processeur (135), une interface réseau (131) destinée à coupler de manière fonctionnelle le système informatique utilisateur (104, 162, 168) à un système informatique de serveur web (108) et une pluralité de services de stockage (SS1 à SS6) sur un réseau (178), dans lequel le système informatique utilisateur (104, 162, 168) comprend un support de stockage (105) ayant un navigateur web (106) pouvant être exécuté par le processeur (135), dans lequel le navigateur web (106) est configuré pour exécuter le procédé suivant de stockage sécurisé de manière cryptographique d'un fichier (101) en utilisant une application web (107) exécutée par le navigateur web (106) :
- faire appeler l'application web (107) depuis le système informatique de serveur web (108) sur le réseau (178) par le navigateur web (106) sur le système informatique utilisateur (104, 162, 168),
- chiffrer le fichier (101) avec une clé cryptographique localement sur le système informatique utilisateur (104, 162, 168) en utilisant l'application web (107),
- faire fournir un plan de distribution (177, 416) par l'application web (107), dans lequel le plan de distribution (177, 416) comprend des instructions pour fragmenter le fichier (101) en une pluralité de fragments de fichier (F1 à F4) au moyen d'une méthode de correction d'erreurs (ECM) et des identifiants de la pluralité de services de stockage (SS1 à SS6) dans les supports de stockage non volatils (SM1 à SM6) desquels les fragments de fichier (F1 à F4) générés doivent être stockés, **caractérisé en ce que**
- le fichier chiffré (101) est fragmenté sur le système informatique utilisateur (104, 162, 168) par l'application web (107) en une pluralité de fragments de fichier (F1 à F4) par la méthode de correction d'erreurs (ECM) conformément au plan de distribution (177, 416), dans lequel au moins l'un des fragments de fichier (F1 à F4) inclut des bits de correction d'erreurs,
- les fragments de fichier (F1 à F4) résultants sont envoyés par l'application web (107) sur le réseau (178) aux services de stockage (SS1 à SS6) identifiés par le plan de distribution (177, 416), dans lequel un jeton d'autorisation est fourni par le système informatique de serveur web (108) pour chacun des services de stockage (SS1 à SS6) en tant que preuve d'autorisation pour stocker le fragment de fichier (F1 à F4) correspondant.

12. Système informatique de serveur web (108) comprenant un processeur (350), une interface réseau (132) pour coupler de manière fonctionnelle le système informatique de serveur web (108) à un système informatique utilisateur (104, 162, 168), dans lequel le système informatique de serveur web (108) comprend un support de stockage (352) contenant des instructions de programme, dans lequel les instructions de programme sont configurées, lorsqu'elles sont exécutées par le processeur (350), pour envoyer des instructions de programme afin d'exécuter l'application web (107) dans un navigateur web (106) sur le système informatique utilisateur (104, 162, 168) sur le réseau (178) au système informatique utilisateur (104, 162, 168) en réponse à la réception d'un appel d'une application web (107) depuis un navigateur web (106) sur le système informatique utilisateur (104, 162, 168) sur le réseau (178), dans lequel l'application web (107) est configurée pour réaliser le procédé suivant de stockage sécurisé de manière cryptographique d'un fichier (101) :
- chiffrer le fichier (101) avec une clé cryptographique localement sur le système informatique utilisateur (104, 162, 168) en utilisant l'application web (107),
- faire fournir un plan de distribution (177, 416) par l'application web (107), dans lequel le plan de distribution (177, 416) comprend des instructions pour fragmenter le fichier (101) en une pluralité de fragments de fichier (F1 à F4) au moyen d'une méthode de correction d'erreurs (ECM) et des identifiants d'une pluralité de services de stockage (SS1 à SS6) dans les supports de stockage non volatils (SM1 à SM6) desquels les fragments de fichier (F1 à F4) générés doivent être stockés, **caractérisé en ce que**
- le fichier chiffré (101) est fragmenté sur le système informatique utilisateur (104, 162, 168) par l'application web (107) en une pluralité de fragments de fichier (F1 à F4) par la méthode de correction d'erreurs (ECM) conformément au plan de distribution (177, 416), dans lequel au moins l'un des fragments de fichier (F1 à F4) inclut des bits de correction d'erreurs,
- les fragments de fichier (F1 à F4) résultants sont envoyés par l'application web (107) sur le réseau (178) aux services de stockage (SS1 à SS6) identifiés par le plan de distribution (177, 416), dans lequel un jeton d'autorisation est fourni par le système informatique du serveur web (108) pour chacun des services de stockage (SS1 à SS6) en tant que preuve d'autorisation pour stocker le fragment de fichier (F1 à F4) correspondant.

13. Système informatique de serveur web selon la revendication 12, dans lequel le système informatique de serveur web (108) est en outre configuré pour fournir un service par l'intermédiaire de l'application web (107), dans lequel le fichier (101) à stocker est généré au cours de l'exécution du service par l'application web (107).

14. Système comprenant un système informatique de serveur de gestion de fichiers (130), un système informatique de serveur web (108) selon l'une quelconque des revendications 12 ou 13, et au moins un système informatique utilisateur (104, 162, 168) selon la revendication 11, dans lequel le système informatique de serveur de gestion de fichiers (130) comprend un processeur (342), une interface réseau (133) destinée à coupler de manière fonctionnelle le système informatique de serveur de gestion de fichiers (130) au système informatique de serveur web (108), à l'au moins un système informatique utilisateur (104, 162, 168) et à une pluralité de services de stockage (SS1 à SS6) sur un réseau (178), et un support de stockage (302) ayant des instructions de programme, dans lequel les instructions de programme sont configurées, lorsqu'elles sont exécutées par le processeur (342), pour réaliser le procédé suivant de stockage sécurisé de manière cryptographique d'un fichier (101) :
- recevoir une requête d'autorisation depuis le système informatique de serveur web (108) pour stocker des fragments de fichier (F1 à F4) du fichier (101) sur le réseau (178) dans la pluralité de services de stockage (SS1 à SS6) conformément à un plan de distribution (177, 416), dans lequel le système informatique de serveur de gestion de fichiers (130) ne fournit aucun des services de stockage (SS1 à SS6),
- en réponse à la réception de la requête d'autorisation, requérir un jeton d'autorisation depuis chacun des plusieurs services de stockage (SS1 à SS6) et transférer les jetons d'autorisation reçus en réponse à la requête à l'au moins un système informatique utilisateur (104, 162, 168),
- stocker le plan de distribution (177, 416), dans lequel le plan de distribution (177, 416) comprend des instructions pour défragmenter le fichier (101) depuis une pluralité de fragments de fichier (F1 à F4) au moyen d'une méthode de correction d'erreurs (ECM) et des identifiants de la pluralité de services de stockage (SS1 à SS6) dans les supports de stockage non volatils (SM1 à SM6) desquels les fragments de fichier (F1 à F4) sont stockés.
